# EUROPEAN PATENT SPECIFICATION

(11) **EP 2 061 268 B1**
(45) Date of publication and mention of the grant of the patent: **20.02.2013**
(21) Application number: 07785349.7
(22) Date of filing: 14.08.2007
(51) Int. Cl.: H04L 12/18, H04L 29/06

(54) **METHOD AND SYSTEM TO ACHIEVE CLUSTER COMMUNICATION SERVICE**
VERFAHREN UND SYSTEM ZUR ERZIELUNG EINES CLUSTERKOMMUNIKATIONSDIENSTES
PROCÉDÉ ET SYSTÈME DE FOURNITURE DE SERVICE DE COMMUNICATION DE GROUPE

(30) Priority: 21.08.2006 CN 200610111528
(43) Date of publication of application: 20.05.2009
(73) Proprietor: Huawei Technologies Co., Ltd., Shenzhen, Guangdong Province 518129 (CN)
(72) Inventor: YIN, Fang, Shenzhen Guangdong 518129 (CN)
(74) Representative: Körber, Martin Hans
(86) International application number: PCT/CN2007/002453
(87) International publication number: WO 2008/025230

(56) References cited:
- EP-A- 1 691 506
- EP-A- 1 850 614
- EP-A1- 1 560 368
- US-A1- 2003 002 448
- US-A1- 2003 097 447
- US-A1- 2004 052 218
- US-B1- 6 757 259
- HUAWEI: "call model for VGCS/VBS in SPLIT architecture" 3GPP DRAFT; C4-061498, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. Fairfax; 20061030, 19 October 2006 (2006-10-19), XP050036704
- HUAWEI: "call model for VGCS/VBS in SPLIT architecture" 3GPP DRAFT; C4-061499, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. Fairfax; 20061030, 19 October 2006 (2006-10-19), XP050036705
- SIEMENS NETWORKS: "Enhancements for VGCS/VBS in SPLIT architecture" 3GPP DRAFT; C4-061857_23205-VGCS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. Fairfax; 20061030, 13 November 2006 (2006-11-13), XP050037023
- SASHA RUDITSKY RADVISION NEW JERSEY ET AL: "Draft new H.248.19 Amendment 1 OEB_AMP#8220;Decomposed multipoint control unit, audio, video and data conferencing packages: New Text Overlay Package and Border and Background PackageOEB_AMP#8221;; TD 237" ITU-T DRAFT STUDY PERIOD 2005-2008, INTERNATIONAL TELECOMMUNICATION UNION, GENEVA ; CH, vol. STUDY GROUP 16, 3 April 2006 (2006-04-03), pages 1-33, XP017411665

## Description

### Field of the Invention

The present invention relates to the trunking technology, and in particular, to a method and a system for implementing a trunking communication service.

### Background of the Invention

In a trunking communication system based on Global System for Mobile Communications (GSM), Voice broadcast service (VBS) and Voice group call service (VGCS) are supported. These services are widely applied in the field requiring a large-scale resource scheduling, such as railway, public security and fire fighting.

VBS is a service in GSM mobile network, in which a voice (or other signals delivered via voice coding) from a service subscriber is delivered to the services of all subscribers or a group of service subscribers in an area. VGCS is a service in GSM mobile network, in which a half-duplex conversation function is provided to a predefined group of subscribers.

The service function of VBS is similar to that of VGCS, and the main difference between VBS and VGCS lies in that: during a VBS call, except for the VBS subscriber which initiates the call, other VBS subscribers may only listen and have no right to speak; but during a VGCS call, both the VGCS subscriber which initiates the call and other VGCS subscribers which participate in the call may be able to apply for the right to speak during the conversation, and may be allowed to speak after the right is applied successfully.

In VBS/VGCS service, a calling service user dials a group call number to call target subscribers pertaining to a group with a group ID in a predefined group call area, so that a conversation service is established between the calling subscriber and the members of the group in the area. All the target VBS/VGCS subscribers in the group may share the same service channel for listening, but the dispatchers respectively occupy their own service channel. For a VGCS call, the VBS/VGCS subscribers in the group may send a conversation request in Push to Talk (PTT) mode, and the system establishes an uplink for the subscriber which is going to speak for providing the conversation service.

In VBS/VGCS service, the calling subscriber includes a VBS/VGCS subscriber which has subscribed to a related group ID, and a dispatcher which has registered in the network. The target subscriber includes all or part of the VBS/VGCS subscribers which lie in the group call area and are identified by the called group call ID, and a pre-registered dispatcher.

In VBS/VGCS service, only one subscriber is allowed to speak (who is referred to as a "talker") at one time. In addition, at most five dispatchers may speak at the same time. A dispatcher needs to hear the voice of all the parties (except for the voice of the dispatcher, in other words, the dispatcher cannot hear his own echo). A subscriber which is listening (referred to as "listener") is able to hear an audio mixing of the voices of all the parties. A subscriber which is speaking (referred to as "talker") is able to receive a sound indication when a dispatcher speaks. The dispatcher is able to speak at any moment, without the need of applying for a right to speak in advance. If a VGCS subscriber wants to speak, the subscriber needs to apply for a right to speak (by pushing a PTT key) in advance, and the right to speak is obtained only when no other VGCS subscribers are speaking. The right to speak is usually assigned according to the principle of "First-Come-First-Served". For VBS subscribers, except that a subscriber who initiates a call can speak, other subscribers have no right to speak all the time.

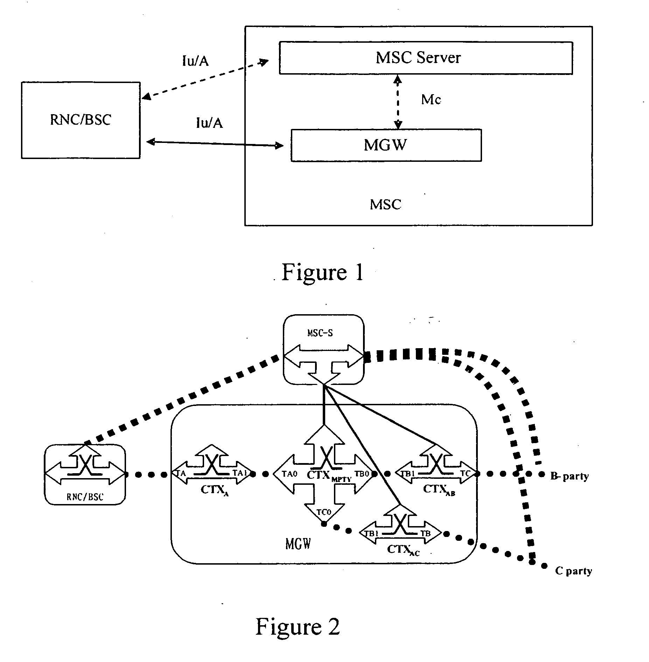

As 2G communication system, GSM, evolves to 3G mobile communication system, UMTS (Universal Mobile Telecommunications System), the architecture of the core network changes. The circuit domain core network after 3G R4 (Release 4) employs an architecture in which the call control and the call bearer are separated. As shown in Figure 1, a mobile switching center (MSC) in 2G communication system is disassembled into an MSC server and a Media Gateway (MGW). The MSC server provides a signaling plane connection to RNC/BSC via an Iu/A interface and performs functions of gateway routing, call control and mobility management; while MGW includes a bearer terminal and a media management device (for example, coding/decoding converter, echo cancelled device or monotone/announcement tone generator), provides a subscriber plane connection to RNC/BSC via a Iu/A interface, and performs the media conversion and frame protocol conversion on media streams transferred between MGW and RNC/BSC and between MGWs. The interface between an MSC server and an MGW is referred to as an Mc interface. The Mc interface uses the H.248/MEGACO (Media Gateway Control) as the control protocol. H.248/MEGACO is an MGW control protocol jointly developed by International Telecommunication Union- Telecommunication Standardization Sector (ITU-T) and Internet Engineering Task Force (IETF), and supports the separation of call control entities from bearer control entities and the separation of bearer control entities from transmission entity.

In the prior art, for example, in H.248/MEGACO protocol, a termination in the context is taken as a basic call model. Because at most five dispatchers may exist in the VGCS/VBS service and they may speak at any moment, a bearer model for a VGCS/VBS call should be based on a multi-party conference. 3GPP TS23.205 provides two bearer models for implementing a multi-party conference.

Model 1: Each party in the multi-party conference is processed in an independent context, and the conference bridge is also processed in an independent context. As shown in Figure 2, CTX_{A} corresponds to subscriber A; CTX_{AB} corresponds to subscriber B; CTX_{AC} corresponds to subscriber C; CTX_{MPTY} corresponds to the conference bridge and is responsible for performing an audio mixing on the voices of subscribers A, B and C; an intra-gateway connection is established between the context of each conference party and the conference bridge context. The purpose of splitting into several contexts is to simplify the interaction (such as handover) with other functions.

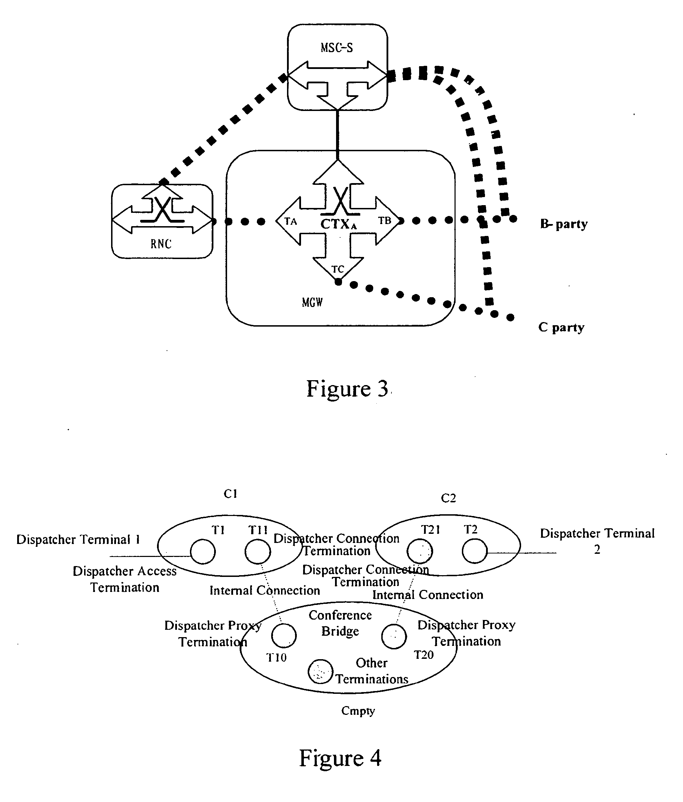

Model 2: During the multi-party conference, all parties are processed in a single multi-party context. As shown in Figure 3, subscribers A, B and C are all configured in the same context CTX_{A}.

For a dispatcher in VGCS/VBS, the dispatcher may speak at any moment and do not need to hear their own echo. Thus, the dispatcher completely conforms to features of supplementary service of the multi-party conference. According to the above two models, the required voice effect may be obtained by establishing a bearer via considering the dispatcher as a normal subscriber in the multi-party conference.

However, for a VBS/VGCS subscriber which has no right to speak ("listener"), the voice effect heard is a mixing of the sound of the talker with the voice of dispatchers. For a VBS/VGCS subscriber which has the right to speak ("talker"), the voice effect heard is a mixing of the sound of the "talker" with the voice of different dispatchers (if the carrier has other requirement, the sound of the "talker" may also be removed). This is evidently different from the supplementary service of an ordinary multi-party conference (in an ordinary conference, the information of the talker will not be sent back to the talker so as to avoid that the subscriber feels an echo).

A "talker" termination needs to hear its own echo, mainly because other "listener" subscribers may exist in the cell where the "talker" is located. These "listener" subscribers and the "talker" subscriber usually share the same wireless channel and land circuit, so that the "talker" subscriber and some "listener" subscribers access the "talker" termination at the same time, and the MGW needs to send back the voice of the "talker" termination along the original path and broadcast the voice to the "listener" subscribers. If it is prescribed that the talker is not allowed to hear the echo, the carrier has to establish an independent downlink for the "talker" subscriber.

For the "listener" termination, a unidirectional topology from the "dispatcher" termination and the "talker" termination to the "listener" termination may be configured or the stream mode of the "listener" termination may be configured as sendOnly. Thus, the "listener" can only passively receive a voice stream from the "dispatcher" and "talker" termination.

For the above "talker" termination, the echo of the "talker" usually needs to be heard. Such a voice effect is different from that of the "dispatcher", and a mechanism has to be introduced to distinguish the "talker" from the dispatcher. For example, a role property is introduced to a termination in the conference so as to indicate the voice effect or the role in the trunking. Thus, the dispatcher, talker and listener may all be established in the context of the conference bridge as the terminations of an ordinary multi-party conference, and only an indication to the property related to the trunking of the termination needs to be added.

However, the following disadvantages exist in the prior art.

1) The "listener" termination corresponds to each downlink of the cells which pertain to the group call area. If the "listener" is considered as an ordinary conference party to establish a bearer, the number of terminations in the context where the conference bridge locates is equal to the sum of the dispatcher number, the talker number and the listener number. In the case that the group call area includes many cells (for example, in the GSM network, a trunking product may support 1024 cells), there may be too many terminations in the context, thus a lot of conference resources are consumed.

2) According to H.248 standard, it is a property determined by the gateway that how many terminations can be supported at most in a context. If the MSC server adds too many terminations in a context, it may be failed to establish the trunking because the MGW cannot support too many terminations.

3) According to H.248 standard, when the MSC server issues a request to the MGW, if the request includes a topology descriptor and a termination does not appear in the topology descriptor, the topology associated to the termination is kept as a constant. However, if a new termination is added to the context, as a default, the topology of the termination with other terminations in the context is configured as "bidirectional", except that there is a further topology descriptor to definitely illustrate another topology. Thus, each time when a new termination is added, if it is not desired to use the default "bidirectional" topology, a topology of the termination with other terminations in the context is to be described. When there are many terminations in the context, it is a heavy burden to describe the topologies of the terminations.

4) To describe the voice effect of the termination, the H.248 standard needs to be extended, and a new trunking package is introduced to define the property of the termination. Thus, the interoperability between the MSC server and the MGW is affected.
US-A-2003002448 discloses a method and system for distributed conference bridge processing in Voice over IP telephony.
EP-A-1691506 discloses a method for establishing muti-party conference service when the basic call media gateway does not support the multi-party conference bridge.
These two documents have nothing to do with the implementation of trunking communication service.

### Summary of the Invention

An object of the present invention is to provide a method and system for implementing a trunking communication service so as to improve the usage factor of the VGCS/VBS bearer resources and reduce the number of terminations in the conference bridge context. As a result, the number of conference audio mixing resources used in the VGCS/VBS service is reduced.

The present invention provides a method for implementing a trunking communication service when a caller initiates a trunking call, including:
establishing, by a Media Gateway, MGW, a caller bearer and a conference bridge context and connecting a caller terminal to the conference bridge context via the caller bearer;
establishing, by the MGW, a listener proxy termination in the conference bridge context, wherein the listener proxy termination is adapted to send a voice of the caller to listener terminals; and
establishing, by the MGW, listener bearers and connecting listener terminals to the listener proxy termination in the conference bridge context via the listener bearers;
wherein the trunking communication service comprises Voice broadcast service, VBS, or Voice Group Call Service, VGCS.

The present invention further provides a system for implementing a trunking communication service, including:
a caller terminal adapted to initiate a trunking call;
a listener proxy establishment unit, adapted to establish a listener proxy termination in a conference bridge context used to send a voice of a caller to listener terminals; and
a listener bearer establishment unit, adapted to establish listener bearers and connect the listener terminals to the listener proxy termination in the conference bridge context via the listener bearers;
wherein the trunking communication service comprises Voice broadcast service, VBS, or Voice Group Call Service, VGCS.

Therefore, according to the present invention, within H.248 standard, the trunking service is implemented without extending any new package. By employing a listener proxy in the conference bridge context, the number of terminations is reduced greatly in the conference bridge context, and the number of conference audio mixing resources used in the trunking service is reduced greatly.

### Brief Description of the Drawings

Figure 1 shows a schematic diagram in which the call control is separated from the call bearer;

Figure 2 shows the first bearer model of an ordinary multi-party conference in the prior art;

Figure 3 shows the second bearer model of an ordinary multi-party conference in the prior art;

Figure 4 shows the first bearer model of dispatcher in the trunking service according to an embodiment of the present invention;

Figure 5 shows the process for establishing the first dispatcher bearer in the trunking service according to an embodiment of the present invention;

Figure 6 shows the second bearer model of dispatcher in the trunking service according to an embodiment of the present invention;

Figure 7 shows the process for establishing the second dispatcher bearer in the trunking service according to an embodiment of the present invention;

Figure 8 shows the first bearer model of a talker in the trunking service according to an embodiment of the present invention;

Figure 9 shows the process for establishing the first talker bearer in the trunking service according to an embodiment of the present invention;

Figure 10 shows the second bearer model of talker in the trunking service according to an embodiment of the present invention;

Figure 11 shows the process for establishing the second talker bearer in the trunking service according to an embodiment of the present invention;

Figure 12 shows the third bearer model of talker in the trunking service according to an embodiment of the present invention;

Figure 13 shows the process for establishing the third talker bearer in the trunking service according to an embodiment of the present invention;

Figure 14 shows the first bearer model of a listener in the trunking service according to an embodiment of the present invention;

Figure 15 shows the process for establishing the first listener bearer in the trunking service according to an embodiment of the present invention;

Figure 16 shows the second bearer model of listener in the trunking service according to an embodiment of the present invention;

Figure 17 shows the process for establishing the second listener bearer in the trunking service according to an embodiment of the present invention;

Figure 18 shows a bearer model in which no dispatcher exists;

Figure 19 shows the first embodiment of the system for implementing a trunking service according to an embodiment of the present invention;

Figure 20 shows the second embodiment of the system for implementing a trunking service according to an embodiment of the present invention;

Figure 21 shows a flow chart of the trunking communication according to an embodiment of the present invention;

Figure 22 shows a flow chart of the listener-talker role conversion according to an embodiment of the present invention;

Figure 23 and Figure 24 show a schematic diagram of the bearer during the listener-talker role conversion; and

Figure 25 shows a schematic diagram of the trunking communication system according to an embodiment of the present invention.

### Detailed Description of the Embodiments

For easier understanding and implementation of the present invention by those skilled in the art, embodiments of the present invention will now be described in conjunction with the drawings.

The present invention provides a method for implementing a trunking communication service, including: establishing a dispatcher bearer, establishing a talker bearer and establishing a listener bearer. The above steps will be described respectively as below.

1. The method for establishing a dispatcher bearer

The dispatcher in a VBS/VGCS call is taken as a subscriber in a supplementary service of a multi-party conference to establish a bearer. In other words, according to the 3GPP TS23.205, two bearer models may be employed: 1) each dispatcher occupies an independent context, the conference bridge is also processed in an independent context, and an internal connection between the context of the dispatcher and the context of the conference bridge is established in the MGW; 2) all the dispatchers are configured in the same context. The above two models for establishing a dispatcher bearer will now be described respectively as below.

1) The method for establishing the first bearer model of dispatcher is as follows.

As shown in Figure 4 and in the following figures, the hollow ellipse represents the context, and the solid circle represents the termination. Figure 4 shows the first bearer model of dispatcher in the trunking service. In the first bearer model of dispatcher, the access termination and the conference bridge of the dispatcher use different contexts.

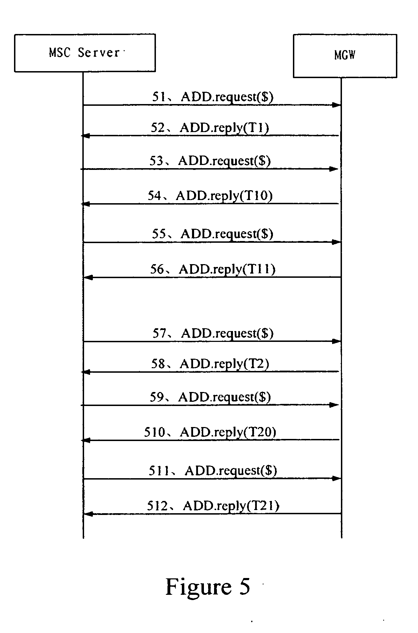

When an MSC server receives a VBS/VGCS call, if it is found that a dispatcher has been defined in the group which the call pertains to, a normal calling process is to be initiated to each dispatcher. Therefore, a bearer channel needs to be established for each dispatcher. It is assumed that the current VBS/VGCS call has 2 dispatchers and the call is initiated by dispatcher 1, the MSC server needs to establish an access termination of the dispatcher (including a terrestrial circuit connecting to a radio channel from the BSC, an inter-office trunk circuit connecting to the PLMN/ISDN network or an intra-office bearer connecting to other MGWs of the MSC Server) and an internal connection termination to the conference bridge on the MGW. The process for establishing the dispatcher bearer will now be described with reference to Figure 5.

Step 51-52: An MSC server sends an ADD.request (a command that adds a termination to a context) message to an MGW for requesting to establish a dispatcher access termination for dispatcher 1. If the dispatcher access termination is a packet-based termination (ATM or IP), the MGW replies with an ADD.reply (reply to the ADD command) message and returns identifications of dispatcher access termination (T1) and dispatcher context (C1) assigned by the MGW, which corresponds to the Prepare Bearer process described in 3GPP TS 29.232. If the dispatcher access termination is a Time division Multiplex (TDM) termination, the MSC server designates identification of dispatcher access termination T1 in the ADD.request message, and the MGW replies with an ADD.reply message and returns the identification of dispatcher context (C1) assigned by the MGW, which corresponds to the Reserve Circuit process described in 3GPP TS 29.232.

Step 53-54: The MSC server sends an ADD.request message to the MGW for requesting to establish a conference bridge context and a dispatcher proxy termination for connecting to dispatcher 1. If the dispatcher proxy termination is a packet-based termination (ATM or IP), the MGW replies with an ADD.reply message and returns identifications of dispatcher proxy termination (T10) and conference bridge context (Cmpty) assigned by the MGW, which corresponds to the Prepare Bearer process described in 3GPP TS 29.232. If the dispatcher connection termination is a TDM termination, the MSC server designates the dispatcher proxy termination identification T10 in the ADD.request message, and the MGW replies with an ADD.reply message and returns the identification of the conference bridge context (Cmpty) assigned by the MGW, which corresponds to the Reserve Circuit process described in 3GPP TS 29.232.

Step 55-56: The MSC server sends an ADD.request message to the MGW for requesting to establish a dispatcher connection termination in context C1, so as to connect to the conference bridge. If the dispatcher connection termination is a packet-based termination (ATM or IP), the MGW replies with an ADD.reply message and returns the identification of the dispatcher connection termination (T11) assigned by the MGW, which corresponds to the Establish Bearer process described in 3GPP TS 29.232. If the dispatcher connection termination is a TDM termination, the MSC server designates the dispatcher connection termination identification T11 in the ADD.request message, and the MGW replies with an ADD.reply message, which corresponds to the Reserve Circuit process described in 3GPP TS 29.232. Thus, a bearer path from dispatcher 1 to the conference bridge is established.

Steps 57-512 show the process for establishing a bearer of dispatcher 2, which is the same as the process for establishing the bearer of dispatcher 1, except that Cmpty has been established by dispatcher 1. Thus, the context may be directly used in Steps 59-510, without the need of assigning a new context by the MGW.

2) The method for establishing the second bearer model of dispatcher is as follows.

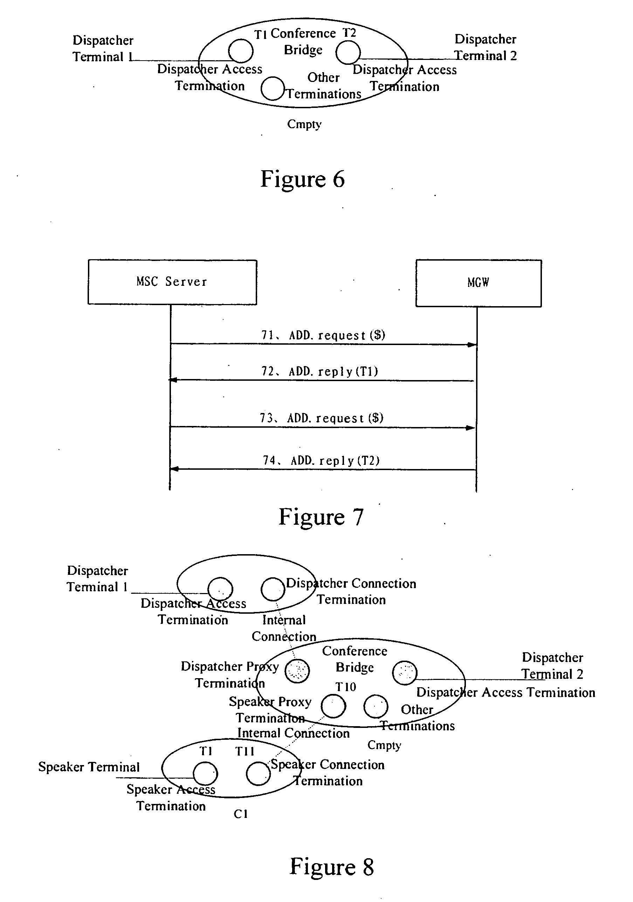

Figure 6 shows the second bearer model of dispatcher of the present invention, and in the second bearer model of dispatcher, the access termination and the conference bridge of the dispatcher use the same context.

When an MSC server receives a VBS/VGCS call, if it is found that a dispatcher has been defined for the group call ID, a normal calling process needs to be initiated to the dispatcher and a bearer channel needs to be established for the dispatcher. It is supposed that the current VBS/VGCS call has 2 dispatchers and the call is initiated by dispatcher 1, the MSC server needs to establish an access termination of the dispatcher on the MGW. Figure 7 shows the process for establishing another dispatcher bearer according to the present invention.

Step 71-72: An MSC server sends an ADD.request message to an MGW, requesting to establish a dispatcher access termination for dispatcher 1. If the dispatcher access termination is a packet-based termination (ATM or IP), the MGW replies with an ADD.reply message and returns identifications of dispatcher access termination (T1) and dispatcher context (Cmpty) assigned by the MGW, which corresponds to the Prepare Bearer process described in 3GPP TS 29.232. If the dispatcher access termination is a TDM termination, the MSC server designates the identification of dispatcher access termination T1 in the ADD.request message, and the MGW replies with an ADD.reply message and returns the identification of dispatcher context (Cmpty) assigned by the MGW, which corresponds to the Reserve Circuit process described in 3GPP TS 29.232. In addition, the context in which the dispatcher exists also performs the function of the conference bridge and performs the audio mixing for the voices of the dispatcher and the talker.

Step 73-74: The process for dispatcher 2 is the same as that of dispatcher 1, except that Cmpty has been established by dispatcher 1. Thus, in Step 73-74, the context may be used directly, without the need of assigning a new context by the MGW.

2. The method for establishing a talker bearer

For a "talker" in VBS/VGCS call, the processing is similar to that of the dispatcher, the processing may be configured in an independent context and may also be directly configured in the conference bridge context, but the voice effect have to be distinguished from that of the dispatcher (for example, the voice effect may be indicated by a termination property). For the "talker" in VGCS call, if it is not desired to indicate the voice effect different from the dispatcher by using an extended termination property, the "talker" may be configured in an independent context. Two unidirectional internal connections from the "talker" context to the conference bridge context may be established. The unidirectional internal connection may be designated via a unidirectional topology and/or unidirectional stream mode. The speech of the talker enters the conference audio mixing via an upstream unidirectional channel and the speech of the talker is also included in the audio mixing and played to the talker via a downstream unidirectional channel.

1) The method for establishing the first bearer model of talker is as follows.

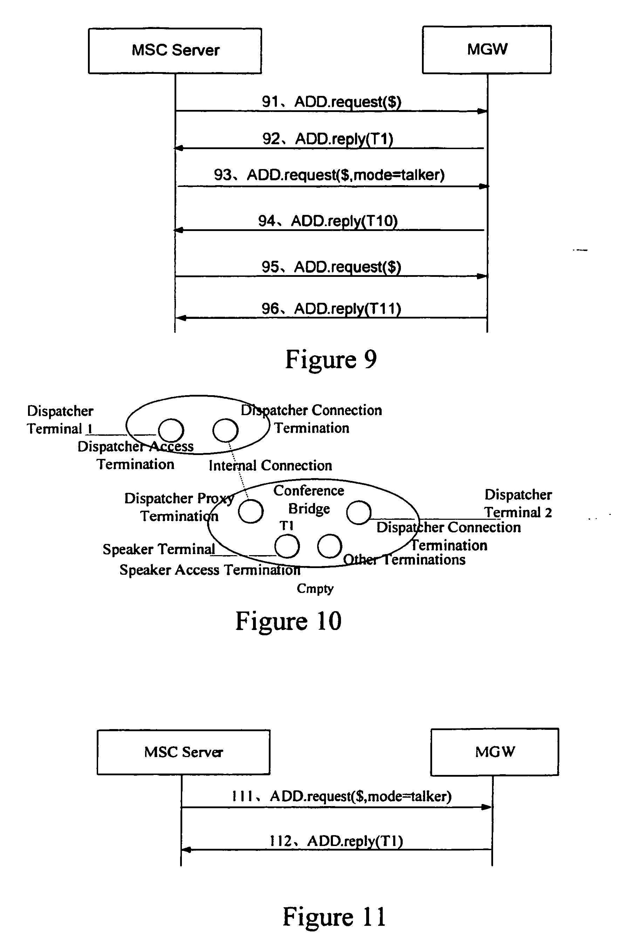

Figure 8 shows the first bearer model of talker. In the first bearer model of talker, the access termination and the conference bridge of the talker use different contexts, and are connected via a bidirectional internal connection. In this embodiment, it is assumed that the call is initiated by the talker. Figure 9 shows the process for establishing the first talker bearer according to the present invention.

Step 91-92: When an MSC server receives a VBS/VGCS call initiated by a VBS/VGCS subscriber, the MSC needs to establish a talker access termination of the VBS/VGCS subscriber and a talker context including the talker access termination on an MGW.

The MSC server sends an ADD.request message to the MGW for requesting to establish a talker access termination for the talker. If the talker access termination is a packet-based termination (ATM or IP), the MGW replies with an ADD.reply (reply to the ADD command) message and returns identifications of talker access termination (T1) and talker context (C1) assigned by the MGW, which corresponds to the Prepare Bearer process described in 3GPP TS 29.232. If the talker access termination is a TDM termination, the MSC server designates the identification of talker access termination T1 in the ADD.request message, and the MGW replies with an ADD.reply message and returns the identification of talker context (C1) assigned by the MSC, which corresponds to the Reserve Circuit process described in 3GPP TS 29.232.

Step 93-94: The MSC server sends an ADD.request message to the MGW for requesting to establish a conference bridge context and a talker proxy termination for connecting to the talker. If the talker proxy termination is a packet-based termination (ATM or IP), the MGW replies with an ADD.reply message and returns identifications of talker proxy termination (T10) and conference bridge context (Cmpty) assigned by the MGW, which corresponds to the Prepare Bearer process described in 3GPP TS 29.232. If the talker connection termination is TDM termination, the MSC server designates the talker proxy termination identification T10 in the ADD.request message, and the MGW replies with an ADD.reply message and returns the identification of the conference bridge context (Cmpty) assigned by the MGW, which corresponds to the Reserve Circuit process described in 3GPP TS 29.232.

When the MSC server establishes talker proxy termination T10, the issued command ADD.request($,mode=talker) carries a mode parameter to indicate that the talker proxy termination is the talker. The mode parameter may be a property of the talker termination, so that the MGW may perform an audio mixing policy different from that of the dispatcher on the talker (for example, by extending a new StreamMode=SendRecvLoopBack, the MGW is able to send the voice of the talker back to the talker termination after mixing the voice of the talker with the voice of the dispatcher).

Step 95-96: The MSC server sends an ADD.request message to the MGW, for requesting to establish a talker connection termination in context C1 so as to connect to the conference bridge. If the talker connection termination is a packet-based termination (ATM or IP), the MGW replies with an ADD.reply message and returns the identification of talker connection termination (T11) assigned by the MGW, which corresponds to the Establish Bearer process described in 3GPP TS 29.232. If the talker connection termination is a TDM termination, the MSC server designates the identification of talker connection termination T11 in the ADD.request message, and the MGW replies with an ADD.reply message, which corresponds to the Reserve Circuit process described in 3GPP TS 29.232. Then, the talker access termination is connected with the talker connection termination. Thus, a bearer path from the talker to the conference bridge is established.

2) The method for establishing the second bearer model of talker is as follows.

Figure 10 shows the second bearer model of talker. In the second bearer model of talker, the access termination and the conference bridge of the talker use the same context. In this embodiment, it is assumed that the call is initiated by the talker. Figure 11 shows the process for establishing the second talker bearer according to the present invention.

Step 111-112: When an MSC server receives a VBS/VGCS call initiated by a VBS/VGCS subscriber, the MSC server sends an ADD.request message to an MGW for requesting to establish a talker access termination for the talker. If the talker access termination is a packet-based termination (ATM or IP), the MGW replies with an ADD.reply message and returns identifications of talker access termination (T1) and talker context (Cmpty) assigned by the MGW, which corresponds to the Prepare Bearer process described in 3GPP TS 29.232. If the talker access termination is a TDM termination, the MSC server designates the identification of talker access termination T1 in the ADD.request message, and the MGW replies with an ADD.reply message and returns the identification of talker context (Cmpty) assigned by the MGW, which corresponds to the Reserve Circuit process described in 3GPP TS 29.232. In addition, the context in which the talker exists also performs the function of the conference bridge and performs the audio mixing of the voices of the dispatcher and the talker.

When the MSC server establishes termination T1, the issued command ADD.request($,mode=talker) carries a mode parameter to indicate the talker. The mode parameter may be a property of the termination, so that the MGW may perform an audio mixing policy different from that of the dispatcher on the talker (for example, by extending a new StreamMode=SendRecvLoopBack, the MGW can send the voice of the talker back to the talker termination after mixing the voice of the talker with the voice of the dispatcher).

3) The method for establishing the third bearer model of talker is as follows.

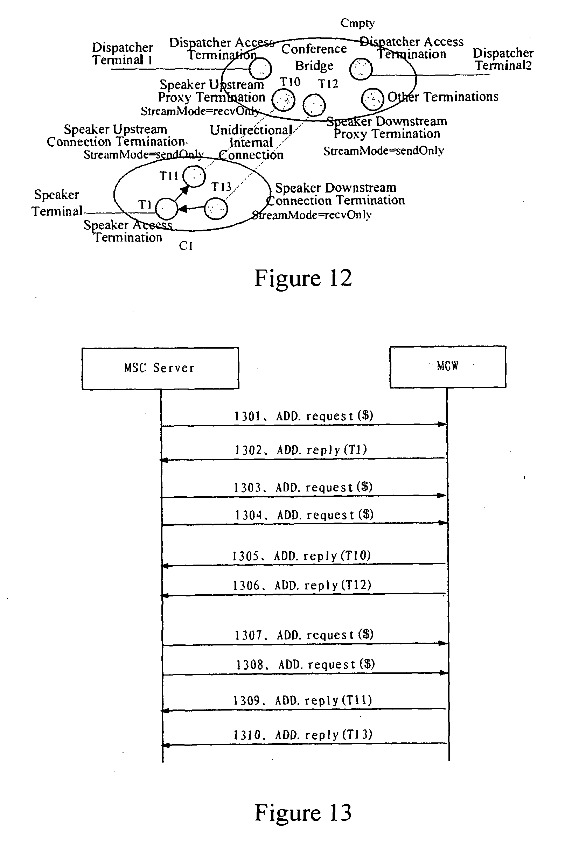

Figure 12 shows the third bearer model of talker. In the third bearer model of talker, the access termination and the conference bridge of the talker use different contexts, and are connected via two unidirectional internal connections.

When an MSC server receives a VBS/VGCS call initiated by a VBS/VGCS subscriber, the MSC server needs to establish a talker access termination of the VBS/VGCS subscriber and a talker context including the talker access termination on an MGW, and establish a talker upstream connection termination and a talker downstream connection termination connected to the conference bridge in the talker context. This process is similar to the process for establishing the first bearer model of dispatcher in the trunking service, except that the talker has two unidirectional connection terminations. In this embodiment, it is assumed that the call is initiated by the talker. Figure 13 shows the process for establishing the third talker bearer according to the present invention.

Step 1301-1302: An MSC server sends an ADD.request message to an MGW for requesting to establish a talker access termination for the talker. If the talker access termination is a packet-based termination (ATM or IP), the MGW replies with an ADD.reply message and returns identifications of talker access termination (T1) and talker context (C1) assigned by the MGW, which corresponds to the Prepare Bearer process described in 3GPP TS 29.232. If the access termination is a TDM termination, the MSC server designates the identification of the talker access termination T1 in the ADD.request message, and the MGW replies with an ADD.reply message and returns the identification of talker context (C1) assigned by the MGW, which corresponds to the Reserve Circuit process described in 3GPP TS 29.232.

Step 1303-1306: The MSC server sends two ADD.request messages to the MGW for requesting to establish a conference bridge context and establish a talker upstream proxy termination and a talker downstream proxy termination in the conference bridge context for connecting the upstream connection termination and the downstream connection termination in the talker context respectively. If the proxy termination is a packet-based termination (ATM or IP), the MGW replies with an ADD.reply message and returns identifications of the talker upstream proxy termination and talker downstream proxy termination (T10, T12) and context (Cmpty) assigned by the MGW, which corresponds to the Prepare Bearer process described in 3GPP TS 29.232. If the proxy termination is a TDM termination, the MSC server designates the termination identification T10, T12 in the ADD.request message, and the MGW replies with an ADD.reply message and returns the identification of the context (Cmpty) assigned by the MGW, which corresponds to the Reserve Circuit process described in 3GPP TS 29.232. It should be noted that T10 sets the stream mode of recvOnly, T12 sets the stream mode of SendOnly; but T10 and T12 may also use the stream mode of sendrecv.

Step 1307-1310: The MSC server sends two ADD.request messages to the MGW for requesting to establish a talker upstream connection termination and a talker downstream connection termination in talker context C1 so as to connect to the talker upstream proxy termination and the talker downstream proxy termination of the conference bridge context respectively. If the talker connection termination is a packet-based termination (ATM or IP), the MGW replies with two ADD.reply messages and returns the identifications of the talker upstream connection termination and the talker downstream connection termination (T11, T13) assigned by the MGW, which corresponds to the Establish Bearer process described in 3GPP TS 29.232. If the talker connection termination is TDM termination, the MSC server designates the identifications of talker connection terminations T11, T13 in the two ADD.request messages, and the MGW replies with an ADD.reply message, which corresponds to the Reserve Circuit process described in 3GPP TS 29.232. It should be noted that T13 sets the stream mode of recvOnly, T11 sets the stream mode of SendOnly; but T11 and T13 may use the stream mode of sendrecv. In addition, T1 needs to set a unidirectional topology to T11, and T13 needs to set a unidirectional topology to T1. Thus, a bearer path from the talker to the conference bridge is established.

3. The method for establishing a listener bearer

For the "listener" in VBS/VGCS call, because the voice effect heard by a plurality of "listeners" is completely the same, no termination needs to be established for each "listener" in the conference bridge context. In the conference bridge context, only a "listener proxy" needs to be established, and the "listener proxy" obtains the audio mixing of the talker and each dispatcher and multicasts the audio mixing to all the "listeners". The "listener proxy" does not need to participate in the audio mixing, thus a unidirectional topology or a unidirectional stream mode may be set. There are various bearer models of the listener, which will now be described respectively below.

1) The method for establishing the first bearer model of listener

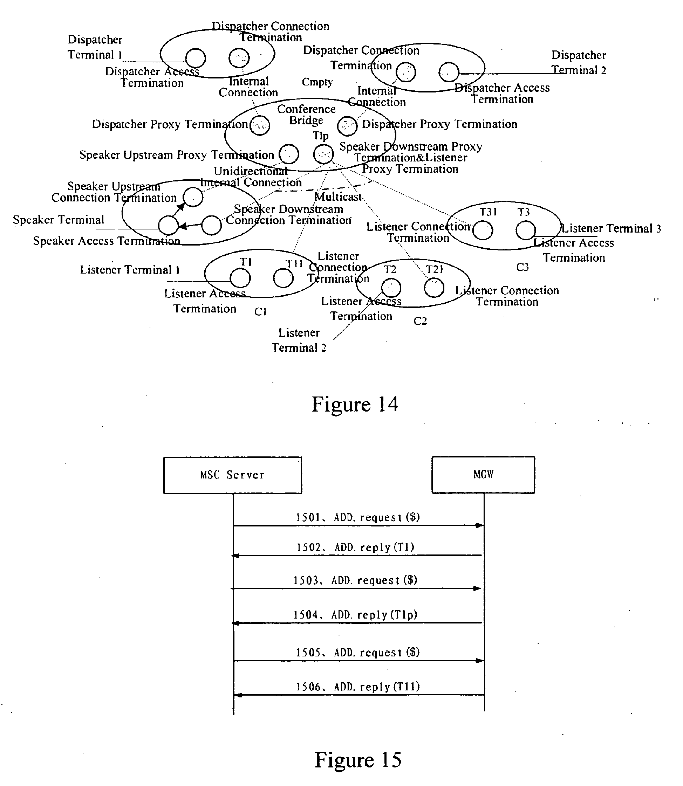

Figure 14 shows the first bearer model of listener. In the first bearer model of listener, each listener access termination is configured in an independent context, so that a unidirectional connection from the conference bridge to the listener may be implemented via the multicast.

When an MSC server receives a VBS/VGCS call, the MSC server indicates the call to a subscriber in a predetermined cell of the group call ID and establishes a bearer channel for the listeners in each cell. The MSC server needs to establish, on the MGW, an access termination of the cell in which the listener exists and an internal connection termination to the conference bridge. Figure 15 shows the process for establishing the first listener bearer according to the present invention.

Step 1501-1502: An MSC server sends an ADD.request message to an MGW for requesting to establish a listener access termination for listener 1. If the access termination is a packet-based termination (ATM or IP), the MGW replies with an ADD.reply message and returns identifications of listener access termination (T1) and listener context (C1) assigned by the MGW, which corresponds to the Prepare Bearer process described in 3GPP TS 29.232. If the access termination is a TDM termination, the MSC server designates the identification of the listener access termination T1 in the ADD.request message, and the MGW replies with an ADD.reply message and returns the identification of listener context (C1) assigned by the MGW, which corresponds to the Reserve Circuit process described in 3GPP TS 29.232.

Step 1503-1504: The MSC server sends an ADD.request message to the MGW, for requesting to establish a listener proxy termination in conference bridge context Cmpty established by the initiator of the VBS/VGCS call. If the listener proxy termination is a packet-based termination (ATM or IP), the MGW replies with an ADD.reply message and returns the identification of listener proxy termination (Tlp) assigned by the MGW, which corresponds to the Prepare Bearer process described in 3GPP TS 29.232. If the internal connection termination is a TDM termination, the MSC server designates the identification of listener proxy termination Tlp in the ADD.request message, and the MGW replies with an ADD.reply message, which corresponds to the Reserve Circuit process described in 3GPP TS 29.232. It should be noted that the ADD.request message carries a multicast request indication, so that the MGW may return a multicast address according to the multicast configuration. The multicast address may be an IP multicast address, or a unicast address, or an identification of an internal channel sharing the sound source, depending on the multicast technology employed.

Step 1505-1506: The MSC server sends an ADD.request message to the MGW, for requesting to establish a listener connection termination in listener context C1 so as to connect to the listener proxy termination in the conference bridge context. If the listener connection termination is a packet-based termination (ATM or IP), the MGW replies with an ADD.reply message and returns the identification of listener connection termination (T11) assigned by the MGW, which corresponds to the Establish Bearer process described in 3GPP TS 29.232. If the listener connection termination is a TDM termination, the MSC server designates the identification of listener connection termination T11 in the ADD.request message, and the MGW replies with an ADD.reply message, which corresponds to the Reserve Circuit process described in 3GPP TS 29.232. Thus, a bearer path from the listener to the conference bridge is established. In addition, the ADD.request message carries a multicast parameter indication, and the multicast parameter returned by the MGW in Step 1503-1504 is issued to listener connection termination T11, so that a downstream multicast channel from the listener proxy termination to the listener connection termination is established.

The processes for establishing listeners 2, 3 are the same as the process for establishing listener 1, except that listener proxy termination Tlp is established by listener 1. Thus, the process may turn to Step 1505-1506 from Step 1501-1502, skipping Step 1503-1504.

It should be noted that if the "talker" uses two unidirectional connections (i.e., the third bearer model of talker), the downstream unidirectional connection may share the same multicast channel with the listener proxy. In other words, the "talker downstream proxy" and the "listener proxy" is the same termination, thus resources on the MGW is saved.

In this bearer model, each listener is configured in an independent context, and unidirectional channels from the "listener proxy" to a plurality of "listeners" are established. At this point, the MSC server needs to indicate some multicast-related parameters to the MGW. For example, the MSC server indicates the multicast address to the "listener proxy" and the "listener", so that the "listener proxy" may send a mixed audio stream to a designated multicast address and the "listener" receives the mixed audio stream from the designated multicast address; or the MSC server indicates a plurality of unicast addresses to the "listener proxy", so that the "listener proxy" copies and distributes the mixed audio stream to "listeners" corresponding to the unicast addresses; or the MSC server indicates the channel sharing the sound source to the "listener proxy" and the "listener", so that the "listener proxy" sends the mixed audio stream to the channel and the "listener" obtains the mixed audio stream from the channel.

Because the number of the "listeners" is great, each listener is configured in an independent context, and the MGW may disperse a trunking call to a plurality of processing modules for processing. Thus, it is advantageous to reduce the load of the MGW and improve the reply speed. In addition, the number of terminations in one context is reduced and the complexity of topology description is lowered.

2) The second bearer model of listener

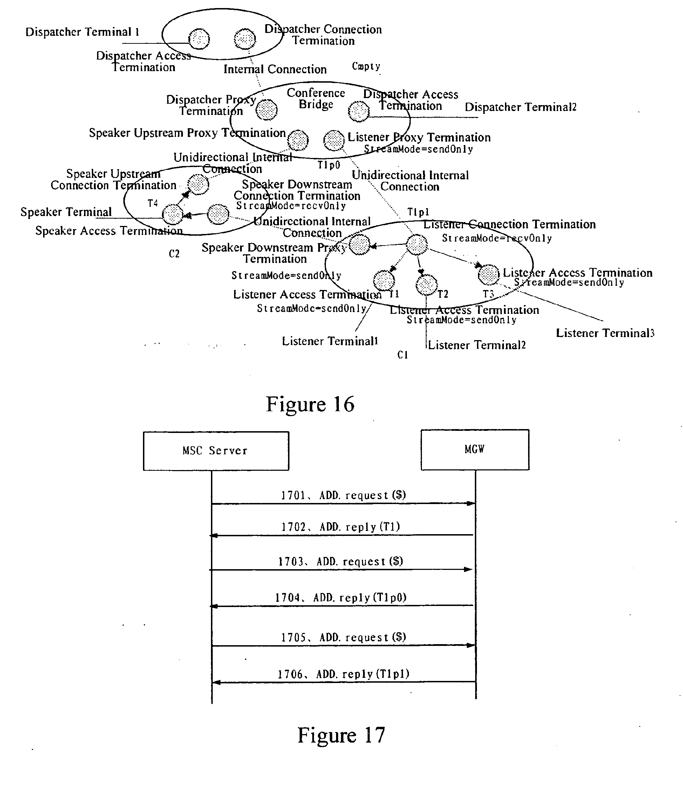

Figure 16 shows the second bearer model of listener. In the second bearer model of listener, each listener is configured in the same context, and a unidirectional connection from the conference bridge to the listener is implemented via an internal connection.

When an MSC server receives a VBS/VGCS call, the MSC server indicates the call to a subscriber in a predetermined cell of the group call ID and establishes a bearer channel for the listeners in each cell. The MSC server needs to establish, on the MGW, an access termination of the cell in which the listener exists and an internal connection termination to the conference bridge. Referring to Figure 17, the process for establishing the second listener bearer according to the present invention will now be described with listener 1 as an example.

Step 1701-1702: An MSC server sends an ADD.request message to an MGW for requesting to establish a listener access termination for listener 1. If the listener access termination is a packet-based termination (ATM or IP), the MGW replies with an ADD.reply message and returns identifications of listener access termination (T1) and listener context (C 1) assigned by the MGW, which corresponds to the Prepare Bearer process described in 3GPP TS 29.232. If the access termination is a TDM termination, the MSC server designates the identification of the listener access termination T1 in the ADD.request message, and the MGW replies with an ADD.reply message and returns the identification of listener context (C1) assigned by the MGW, which corresponds to the Reserve Circuit process described in 3GPP TS 29.232.

Step 1703-1704: The MSC server sends an ADD.request message to the MGW and establishes a listener proxy termination in conference bridge context Cmpty established by the initiator of the VBS/VGCS call. If the listener proxy termination is a packet-based termination (ATM or IP), the MGW replies with an ADD.reply message and returns the identification of listener proxy termination (Tlp0) assigned by the MGW, which corresponds to the Prepare Bearer process described in 3GPP TS 29.232. If the listener proxy termination is a TDM termination, the MSC server designates the identification of listener proxy termination Tlp0 in the ADD.request message and the MGW replies with an ADD.reply message, which corresponds to the Reserve Circuit process described in 3GPP TS 29.232.

Step 1705-1706: The MSC server sends an ADD.request message to the MGW for requesting to establish a listener connection termination in context C1, so as to connect to the listener proxy termination of the conference bridge. If the listener connection termination is a packet-based termination (ATM or IP), the MGW replies with an ADD.reply message and returns the identification of listener connection termination (Tlp1) assigned by the MGW, which corresponds to the Establish Bearer process described in 3GPP TS 29.232. If the listener connection termination is a TDM termination, the MSC server designates the identification of listener connection termination Tlp1 in the ADD.request message, and the MGW replies with an ADD.reply message, which corresponds to the Reserve Circuit process described in 3GPP TS 29.232. In addition, the unidirectional topology from Tlp1 to T1 needs to be indicated, and/or the StreamMode of T1 needs to be indicated as sendOnly. Thus, a bearer path from listener 1 to the conference bridge is established.

The bearer process of listeners 2 and 3 only needs to establish listener access terminations T2 and T3 in C1 and indicate the unidirectional topology relation from Tlp1 to T2 and T3 or indicate that the StreamMode of T2 and T3 is sendOnly.

The termination established in the above listener bearer establishment step may describe the unidirectional topology and the unidirectional stream mode, so that it is advantageous for the gateway to determine the media flow direction and reduce the resources occupied. Because only the listener connection termination sends the media stream to the listener access termination in the context shared by each listener, all the topologies of the context are unidirectional topologies from the listener connection termination to the listener access termination; or, only the StreamMode of the listener connection termination is recvOnly and the StreamModes of other terminations are sendOnly among all terminations in the context even without the descriptions of the topology. Thus, the MGW does not need to assign conference bridge resources, and on the contrary, the MGW sends the media stream received by the listener connection termination directly to the listener access termination.

It should be noted that if the "talker" uses two unidirectional connections (i.e., the third bearer model of talker), the downstream unidirectional connection may share one downstream multicast channel with other listener access terminations. In other words, the talker downstream proxy termination receives a media stream directly from the listener connection termination (as shown in Figure 16), thus resources on the MGW is saved.

All the "listeners" are configured in one context, and at the same time, the unidirectional topology to the "listener" is designated or the unidirectional stream mode of the "listener" is designated. In addition, the topology and the stream mode may be used in conjunction. The MGW is indicated that no audio mixing is needed via the unidirectional topology and/or the stream mode. As a result, it may be avoided that the MGW uses unnecessary conference resources. At this point, multicast occurs in the MGW and is invisible to the MSC server.

Various bearer models have been described for each of the above "dispatcher", "talker" and "listener" respectively. These bearer models may be used in collocation with allowed forms. For example, in Figure 8, dispatcher 1 uses the first bearer model, in other words, the dispatcher access termination uses an independent context and connects to the conference bridge context via the dispatcher connection termination. While dispatcher 2 uses the second bearer model, in other words, the dispatcher access termination is directly configured in the conference bridge context.

In VBS/VGCS service, the dispatcher is preconfigured in the system, and it is allowed that no dispatcher is configured in a trunking. At this point, the bearer model only includes talkers and listeners. Because only one VBS/VGCS subscriber is speaking at a moment, no conference bridge resource needs to be configured on the MGW, and the voice of the talker may be sent to the listener directly.

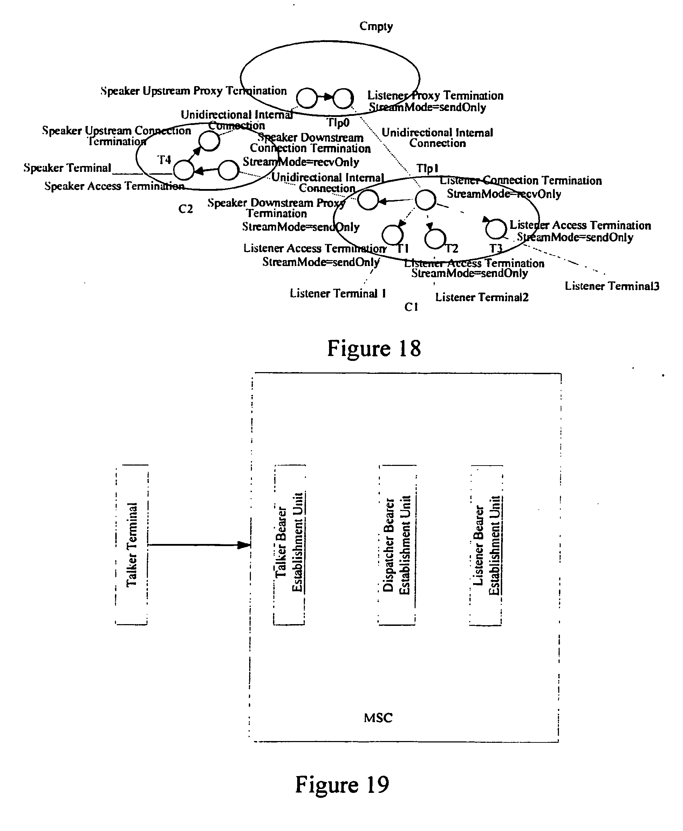

The three kinds of bearer models of the talker and the two kinds of bearer models of the listener are still applicable. The signaling processes thereof are completely the same. For example, Figure 16 employs the third bearer model of talker and the second bearer model of listener. If no dispatcher exists, Figure 16 becomes Figure 18. At this point, the context Cmpty in which the talker upstream proxy termination and the listener proxy termination exist is an ordinary context which does not occupy any conference bridge resource.

### Embodiment 1

This embodiment describes a VBS call initiated by a dispatcher. In this embodiment, "dispatcher" cooperates with "listener" and no "talker" exists; in other words, the first bearer model of dispatcher and the first bearer model of listener are employed.

1) Establishing a dispatcher bearer

As shown in Figure 4, when an MSC server receives a VBS/VGCS call, if it is found that a dispatcher is defined in the group in which the call exists, a normal calling process to each dispatcher needs to be initiated. Therefore, a bearer channel needs to be established for each dispatcher. It is supposed that the current VBS/VGCS call has 2 dispatchers and the call is initiated by dispatcher 1, the MSC server needs to establish an access termination of the dispatcher (the access termination of the dispatcher may be a terrestrial circuit connecting to a radio channel from the BSC, or an inter-office trunk circuit connecting to the PLMN/ISDN network, or an intra-office bearer connecting to other MGWs of the current MSC Server) and an internal connection termination to the conference bridge on the MGW. Figure 5 shows the process for establishing the dispatcher bearer as below.

Step 51-52: An MSC server sends an ADD.request (additional request) message to an MGW, for requesting to establish a dispatcher access termination for dispatcher 1. If the dispatcher access termination is a packet-based termination (ATM or IP), the MGW replies with an ADD.reply (reply to the ADD command) message and returns identifications of dispatcher context (C1) and dispatcher access termination (T1) assigned by the MGW, which corresponds to the Prepare Bearer process described in 3GPP TS 29.232. If the dispatcher access termination is a TDM termination, the MSC server designates identification of dispatcher access termination T1 in the ADD.request message, and the MGW replies with an ADD.reply message and returns the identification of dispatcher context (C1) assigned by the MGW, which corresponds to the Reserve Circuit process described in 3GPP TS 29.232.

Step 53-54: The MSC server sends an ADD.request message to the MGW, for requesting to establish a conference bridge context and a dispatcher proxy termination for connecting to dispatcher 1. If the dispatcher proxy termination is a packet-based termination (ATM or IP), the MGW replies with an ADD.reply message and returns identifications of conference bridge context (Cmpty) and dispatcher proxy termination (T10) assigned by the MGW, which corresponds to the Prepare Bearer process described in 3GPP TS 29.232. If the dispatcher connection termination is a TDM termination, the MSC server designates the dispatcher proxy termination identification T10 in the ADD.request message, and the MGW replies with an ADD.reply message and returns the identification of the conference bridge context (Cmpty) assigned by the MGW, which corresponds to the Reserve Circuit process described in 3GPP TS 29.232.

Step 55-56: The MSC server sends an ADD.request message to the MGW for requesting to establish a dispatcher connection termination in context C1, so as to connect to the conference bridge. If the dispatcher connection termination is a packet-based termination (ATM or IP), the MGW replies with an ADD.reply message and returns the identification of the dispatcher connection termination (T11) assigned by the MGW, which corresponds to the Establish Bearer process described in 3GPP TS 29.232. If the dispatcher connection termination is a TDM termination, the MSC server designates the dispatcher connection termination identification T11 in the ADD.request message, and the MGW replies with an ADD.reply message, which corresponds to the Reserve Circuit process described in 3GPP TS 29.232. Thus, a bearer path from dispatcher 1 to the conference bridge is established.

Step 57-512 show the process for establishing a bearer of dispatcher 2, which is the same as the process for establishing the bearer of dispatcher 1, except that context Cmpty has been established by dispatcher 1. The context Cmpty may be directly used in Steps 59-510, without the need of assigning a new context by the MGW.

2) Establishing a listener bearer

Figure 14 shows a bearer model of listener according to this embodiment. In the bearer model of listener, each listener access termination is configured in an independent context, so that a unidirectional connection from the conference bridge to the listener may be implemented via the multicast.

When an MSC server receives a VBS/VGCS call, the MSC server indicates the call to a subscriber in a predetermined cell of the group call ID and establishes a bearer channel for the listeners in each cell. The MSC server needs to establish, on the MGW, an access termination of the cell in which the listener exists and an internal connection termination to the conference bridge. Figure 15 shows the process for establishing the first listener bearer according to the present invention.

Step 1501-1502: An MSC server sends an ADD.request message to an MGW for requesting to establish a listener access termination for listener 1. If the access termination is a packet-based termination (ATM or IP), the MGW replies with an ADD.reply message and returns identifications of listener access termination (T1) and listener context (C1) assigned by the MGW, which corresponds to the Prepare Bearer process described in 3GPP TS 29.232. If the access termination is a TDM termination, the MSC server designates the identification of the listener access termination T1 in the ADD.request message, and the MGW replies with an ADD.reply message and returns the identification of listener context (C1) assigned by the MGW, which corresponds to the Reserve Circuit process described in 3GPP TS 29.232.

Step 1503-1504: The MSC server sends an ADD.request message to the MGW, for requesting to establish a listener proxy termination in conference bridge context Cmpty established by the initiator of the VBS/VGCS call. If the listener proxy termination is a packet-based termination (ATM or IP), the MGW replies with an ADD.reply message and returns the identification of listener proxy termination (Tlp) assigned by the MGW, which corresponds to the Prepare Bearer process described in 3GPP TS 29.232. If the internal connection termination is a TDM termination, the MSC server designates the identification of listener proxy termination Tlp in the ADD.request message, and the MGW replies with an ADD.reply message, which corresponds to the Reserve Circuit process described in 3GPP TS 29.232. It should be noted that the ADD.request message carries a multicast request indication, so that the MGW may return a multicast address according to the multicast configuration. The multicast address may be an IP multicast address, or a unicast address, or an identification of an internal channel sharing the sound source, depending on the multicast technology employed.

Step 1505-1506: The MSC server sends an ADD.request message to the MGW, for requesting to establish a listener connection termination in listener context C1, so as to connect to the listener proxy termination in the conference bridge context. If the listener connection termination is a packet-based termination (ATM or IP), the MGW replies with an ADD.reply message and returns the identification of listener connection termination (T11) assigned by the MGW, which corresponds to the Establish Bearer process described in 3GPP TS 29.232. If the listener connection termination is a TDM termination, the MSC server designates the identification of listener connection termination T11 in the ADD.request message, and the MGW replies with an ADD.reply message, which corresponds to the Reserve Circuit process described in 3GPP TS 29.232. Thus, a bearer path from the listener to the conference bridge is established. In addition, the ADD.request message carries a multicast parameter indication, and the multicast parameter returned by the MGW in Step 1503-1504 is issued to listener connection termination T11, so that a downstream multicast channel from the listener proxy termination to the listener connection termination is established.

The process for establishing listeners 2, 3 is the same as the process for establishing listener 1, except that listener proxy termination is established by listener 1. Thus, the process may turn to Step 1505-1506 from Step 1501-1502, skipping Step 1503-1504.

In the bearer model, each listener is configured in an independent context, and unidirectional channels from the "listener proxy" to a plurality of "listeners" are established. At this point, the MSC server needs to indicate some multicast-related parameters to the MGW. For example, the MSC server indicates the multicast address to the "listener proxy" and the "listener", so that the "listener proxy" may send a mixed audio stream to a designated multicast address and the "listener" receives a mixed audio stream from the designated multicast address; or the MSC server indicates a plurality of unicast addresses to the "listener proxy", so that the "listener proxy" copies and distributes the mixed audio stream to "listeners" corresponding to the unicast addresses; or the MSC server indicates the channel sharing the sound source to the "listener proxy" and the "listener", so that the "listener proxy" may send the mixed audio stream to the channel and the "listener" obtains the mixed audio stream from the channel.

Because the number of the "listeners" is great, each listener is configured in an independent context, and the MGW may disperse a trunking call to a plurality of processing modules for processing. Thus, it is advantageous to reduce the load of the MGW and improve the reply speed. In addition, the number of terminations in one context is reduced and the complexity of topology description is lowered.

After the dispatcher bearer and the listener bearer are established, the dispatchers may send a voice to the conference bridge context, and the listener may hear an audio mixing of the dispatchers.

### Embodiment 2

This embodiment describes another case in which "dispatchers", "talkers" and "listeners" are configured. In other words, the second bearer model of dispatcher, the third bearer model of talker and the second bearer model of listener are employed. In this embodiment, it is assumed that the talker initiates a VBS/VGCS call.

1) Establishing a talker bearer

Figure 12 shows a bearer model of talker according to this embodiment. In the bearer model of talker, the access termination and the conference bridge of the talker use different contexts, and are connected via two unidirectional internal connections.

When an MSC server receives a VBS/VGCS call initiated by a VBS/VGCS subscriber, the MSC server needs to establish a talker access termination of the VBS/VGCS subscriber and a talker context including the talker access termination on an MGW, and establish a talker upstream connection termination and a talker downstream connection termination which are connected to the conference bridge in the talker context. This process is similar to that for establishing the first bearer model of dispatcher in the trunking service, except that the talker has two unidirectional connection terminations. In this embodiment, it is assumed that the call is initiated by the talker. Figure 13 shows the process for establishing the third talker bearer according to the present invention.

Step 1301-1302: An MSC server sends an ADD.request message to an MGW for requesting to establish a talker access termination for the talker. If the talker access termination is a packet-based termination (ATM or IP), the MGW replies with an ADD.reply message and returns identifications of talker access termination (T1) talker context (C1) assigned by the MGW, which corresponds to the Prepare Bearer process described in 3GPP TS 29.232. If the access termination is a TDM termination, the MSC server designates the identification of talker access termination T1 in the ADD.request message, and the MGW replies with an ADD.reply message and returns the identification of talker context (C1) assigned by the MGW, which corresponds to the Reserve Circuit process described in 3GPP TS 29.232.

Step 1303-1306: The MSC server sends two ADD.request messages to the MGW for requesting to establish a conference bridge context and establish a talker upstream proxy termination and a talker downstream proxy termination in the conference bridge context for connecting the upstream connection termination and the downstream connection termination in the talker context respectively. If the proxy termination is a packet-based termination (ATM or IP), the MGW replies with an ADD.reply message and returns identifications of the talker upstream proxy termination and talker downstream proxy termination (T10, T12) and context (Cmpty) assigned by the MGW, which corresponds to the Prepare Bearer process described in 3GPP TS 29.232. If the proxy termination is a TDM termination, the MSC server designates the termination identification T10, T12 in the ADD.request message, and the MGW replies with an ADD.reply message and returns the identification of the context (Cmpty) assigned by the MGW, which corresponds to the Reserve Circuit process described in 3GPP TS 29.232. It should be noted that T10 sets the stream mode of recvOnly, and T12 sets the stream mode of SendOnly; but T10 and T12 may also use the stream mode of sendrecv.

Step 1307-1310: The MSC server sends two ADD.request messages to the MGW for requesting to establish a talker upstream connection termination and a talker downstream connection termination in talker context C1 so as to connect to the talker upstream proxy termination and the talker downstream proxy termination of the conference bridge context. If the talker connection termination is a packet-based termination (ATM or IP), the MGW replies with two ADD.reply messages and returns the identifications of the talker upstream connection termination and the talker downstream connection termination (T11, T13) assigned by the MGW, which corresponds to the Establish Bearer process described in 3GPP TS 29.232. If the talker connection termination is TDM termination, the MSC server designates the identifications of talker connection terminations T11, T13 in the two ADD.request messages, and the MGW replies with an ADD.reply message, which corresponds to the Reserve Circuit process described in 3GPP TS 29.232. It should be noted that T13 sets the stream mode of recvOnly, T11 sets the stream mode of SendOnly; but T11 and T13 may use the stream mode of sendrecv. In addition, T1 needs to set a unidirectional topology to T11, and T13 needs to set a unidirectional topology to T1. Thus, a bearer path from the talker to the conference bridge is established.

2) Establishing a dispatcher bearer

Figure 6 shows a bearer model of dispatcher according to this embodiment. In the bearer model of dispatcher, the conference bridge and the access termination of the dispatcher use the same context.

When an MSC server receives a VBS/VGCS call, if it is found that a dispatcher has been defined by the group call ID, a normal calling process needs to be initiated to the dispatcher and a bearer channel needs to be established for the dispatcher. It is supposed that the current VBS/VGCS call has 2 dispatchers, and the MSC server needs to establish an access termination of the dispatcher on the MGW. Figure 7 shows the process for establishing the dispatcher bearer according to this embodiment.

Step 71-72: The MSC server sends an ADD.request message to the MGW, for requesting to establish a dispatcher access termination for dispatcher 1 in the conference bridge context. If the dispatcher access termination is a packet-based termination (ATM or IP), the MGW replies with an ADD.reply message and returns the identification of dispatcher access termination (T1) assigned by the MGW, which corresponds to the Prepare Bearer process described in 3GPP TS 29.232. If the dispatcher access termination is a TDM termination, the MSC server designates the identification of dispatcher access termination T1 in the ADD.request message, and the MGW replies with an ADD.reply message, which corresponds to the Reserve Circuit process described in 3GPP TS 29.232.

Step 73-74: The process for establishing dispatcher 2 is the same as that for establishing dispatcher 1.

3) Establishing a listener bearer

Figure 16 shows a bearer model of listener according to this embodiment. In the bearer model of listener, all listeners are configured in the same context, and unidirectional connections from the conference bridge to the listeners are implemented via an internal connection.

When an MSC server receives a VBS/VGCS call, the MSC server indicates the call to a subscriber in a predetermined cell of the group call ID and establishes a bearer channel for the listeners in each cell. The MSC server needs to establish, on the MGW, an access termination of the cell in which the listener exists and an internal connection termination to the conference bridge. Referring to Figure 17, the process for establishing a listener bearer according to this embodiment will now be described with listener 1 taken as an example.

Step 1701-1702: An MSC server sends an ADD.request message to an MGW for requesting to establish a listener access termination for listener 1. If the listener access termination is a packet-based termination (ATM or IP), the MGW replies with an ADD.reply message and returns identifications of listener access termination (T1) and listener context (C1) assigned by the MGW, which corresponds to the Prepare Bearer process described in 3GPP TS 29.232. If the access termination is a TDM termination, the MSC server designates the identification of the listener access termination T1 in the ADD.request message, and the MGW replies with an ADD.reply message and returns the identification of listener context (C1) assigned by the MGW, which corresponds to the Reserve Circuit process described in 3GPP TS 29.232.

Step 1703-1704: The MSC server sends an ADD.request message to the MGW and establishes a listener proxy termination in conference bridge context Cmpty established by the initiator of the VBS/VGCS call. If the listener proxy termination is a packet-based termination (ATM or IP), the MGW replies with an ADD.reply message and returns the identification of listener proxy termination (Tlp0) assigned by the MGW, which corresponds to the Prepare Bearer process described in 3GPP TS 29.232. If the listener proxy termination is a TDM termination, the MSC server designates the identification of listener proxy termination Tlp0 in the ADD.request message, and the MGW replies with an ADD.reply message, which corresponds to the Reserve Circuit process described in 3GPP TS 29.232.

Step 1705-1706: The MSC server sends an ADD.request message to the MGW for requesting to establish a listener connection termination in context C1, so as to connect to the listener proxy termination of the conference bridge. If the listener connection termination is a packet-based termination (ATM or IP), the MGW replies with an ADD.reply message and returns the identification of listener connection termination (Tlp1) assigned by the MGW, which corresponds to the Establish Bearer process described in 3GPP TS 29.232. If the listener connection termination is a TDM termination, the MSC server designates the identification of listener connection termination Tlp1 in the ADD.request message, and the MGW replies with an ADD.reply message, which corresponds to the Reserve Circuit process described in 3GPP TS 29.232. In addition, the unidirectional topology from Tlp1 to T1 needs to be indicated, and/or the StreamMode of T1 needs to be indicated as sendOnly. Thus, a bearer path from listener 1 to the conference bridge is established.

The bearer process of listeners 2 and 3 only needs to establish listener access terminations T2 and T3 in C1 and indicate the unidirectional topology relation from Tlp1 to T2 and T3, in other words, indicate that the StreamMode of T2 and T3 is sendOnly.

The termination established in the above listener bearer establishment step may describe the unidirectional topology and the unidirectional stream mode, so that it is advantageous for the gateway to determine the media flow direction and reduce the resources occupied. Because only the listener connection termination sends the media stream to the listener access termination in the context shared by each listener, all the topologies of the context are unidirectional topologies from the listener connection termination to the listener access termination; or, only the StreamMode of the listener connection termination is recvOnly and the StreamModes of other terminations are sendOnly among all terminations in the context even without the descriptions of the topology. Thus, the MGW does not need to assign conference bridge resources, and on the contrary, the MGW sends the media stream received by the listener connection termination directly to the listener access termination.

As shown in Figure 19, the present invention further discloses a system for implementing a trunking communication service, including:
a talker terminal, adapted to initiate a trunking call;
a talker bearer establishment unit, adapted to establish a talker bearer and a conference bridge context and connect the talker terminal to the conference bridge context via the talker bearer;
a dispatcher bearer establishment unit, adapted to establish a dispatcher bearer and connect a dispatcher terminal to the conference bridge context via the dispatcher bearer;
a listener proxy establishment unit (not shown), adapted to establish a listener proxy termination in the conference bridge context configured to send a voice of the talker or/and dispatcher to the listener terminal ; and
a listener bearer establishment unit, adapted to establish a listener bearer and connect the listener terminal to the conference bridge context.

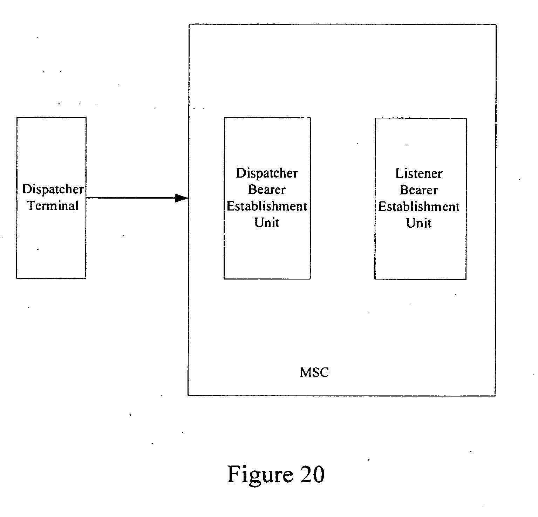

As shown in Figure 20, the present invention further discloses another system for implementing a trunking communication service, including:
a dispatcher terminal, adapted to initiate a trunking call;
a dispatcher bearer establishment unit, adapted to establish a dispatcher bearer and a conference bridge context and connect the dispatcher terminal with the conference bridge context via the dispatcher bearer;
a listener proxy establishment unit (not shown), adapted to establish a listener proxy termination in the conference bridge context configured to send a voice of the dispatcher to a listener terminal; and
a listener bearer establishment unit, adapted to establish a listener bearer and connect the listener bearer to the conference bridge context.

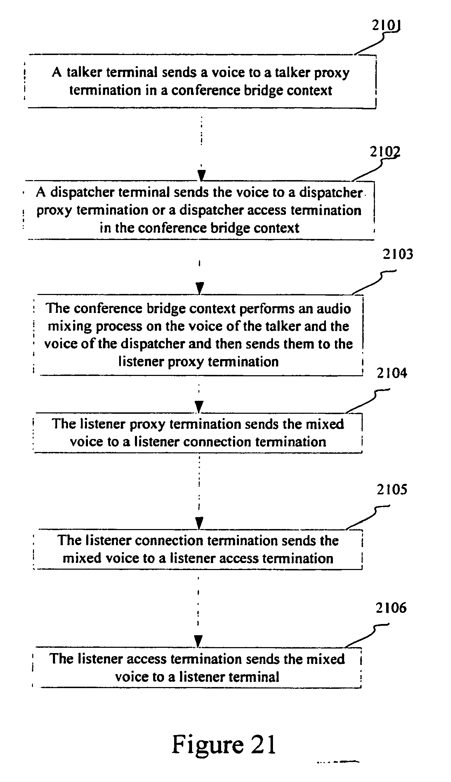

As shown in Figure 21, the present invention further discloses a method for implementing a trunking communication. Referring to Figure 19, the method for implementing the trunking communication according to the present invention will now be described.

Step 2101: A talker terminal sends a voice to a talker proxy termination of a conference bridge context.

Step 2102: A dispatcher terminal sends a voice to a dispatcher proxy termination or a dispatcher access termination of the conference bridge context.

Step 2103: The conference bridge context performs an audio mixing process on the voice of the talker and the voice of the dispatcher so as to form a new voice to be sent to the listener proxy termination.

Step 2104: The listener proxy termination sends the voice from the conference bridge to a listener connection termination.

Step 2105: The listener connection termination sends the voice from the listener proxy termination to a listener access termination.

Step 2106: The listener access termination sends the voice from the connection termination to a listener terminal.

The process in which the "listener proxy" multicasts a voice to the "listeners" may be implemented in various modes. Three examples of the process will be described as below.

1. If the internal network of the MGW supports the multicast protocol such as IP multicast, the MSC server or the MGW puts a listener into a multicast group. At this point, a "listener proxy" sends a mixed audio stream (which includes the voices of the talker and each dispatcher) to a multicast address. The MSC server or the MGW put the listeners of the same trunking into the multicast group, thus all the listeners may receive the data sent by the "listener proxy".

2. If the internal network of the MGW does not support the multicast protocol, a "multi-unicast" technology may be used, in other words, the "listener proxy" termination sends more than one media stream copies to different listener terminations. At this point, the "listener proxy" needs to send a mixed audio stream (including the voices of the talker and each dispatcher) to a plurality of unicast addresses at the same time.

3. A mode similar to the asynchronous voice is employed. In H.248 standard, it is described that when the same signal is issued to a plurality of terminations in a transaction, the MGW may use the same sound source to generate the signals. In fact, for monotones such as ringback tone and ringing tone, no matter whether the terminations are in the same context or whether the signal is issued in the same transaction, the sound source may be shared. Therefore, if the MGW supports the above technology, the mixed audio stream in the trunking may be taken as a signal from a shared sound source and then sent to each listener. At this point, the "listener proxy" sends a mixed audio stream (including the voices of the talker and each dispatcher) to a channel sharing the sound source, while each listener waits on the channel sharing the sound source to listen to the voice. The connection is implemented in the MGW (for example, via a TDM backplane).

During the trunking communication, in VBS subscribers, only the subscriber who initiates a call is allowed to speak and other subscribers have no right to speak all the time. Therefore, once the bearers of the dispatcher, the talker and the listener are established according to the above steps, the subsequent bearer operation needs not to be performed during the conversation process.

But in VGCS subscribers, after the talker speaks, other VGCS subscribers (listeners) may press a PTT key to apply for a right to speak. If no other VGCS subscriber is speaking, the system grants the listener the right to speak, and the listener becomes a new talker. Thus, a bearer conversion from the original talker to the listener and a bearer conversion from a certain listener to the new talker have to be performed. During the VGCS conversation process, the role conversion between the talker and the listener is frequent and the operation of bearer conversion needs to be as brief as possible, so that the reply time of the system may be improved.

No matter what bearer model is employed by the talker and the listener, a rapid role conversion between the talker and the listener may be implemented by exchanging the locations of the talker access termination and the listener access termination using a MOV (Move Termination) instruction of H.248. This process will now be illustrated by taking the third bearer model of talker and the second bearer model of listener as an example.

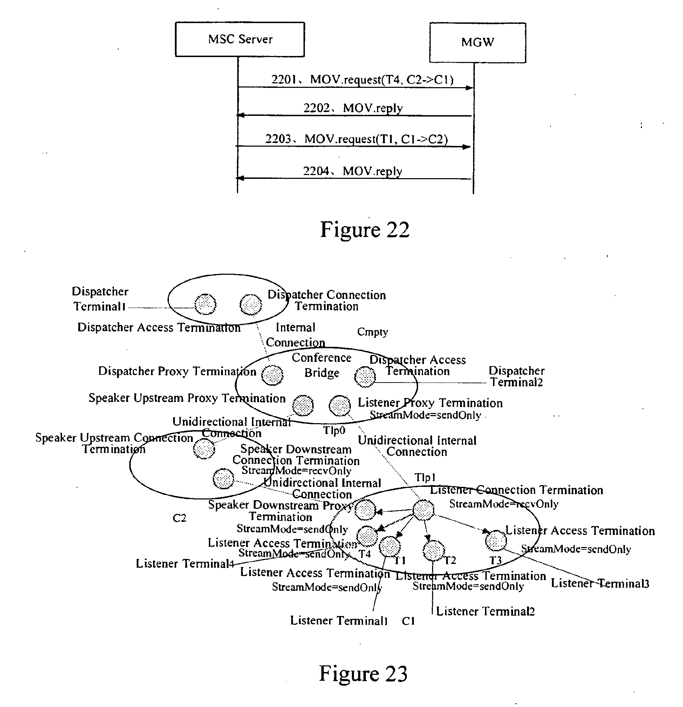

After a VGCS call is established, the bearer model is as shown in Figure 16. At this point, if a VGCS subscriber acting as the talker finishes the speech and a VGCS subscriber acting as the listener (listener terminal 1) requests to speak, the system modifies the original talker terminal as a listener bearer and modifies the original listener terminal 1 as a talker bearer. Figure 22 shows the role conversion process between the talker and the listener.

Step 2201-2202: An MSC server sends a MOVrequest (Move Request) message to an MGW for requesting to move talker access termination T4 from talker context C2 to listener context C1 and indicates the unidirectional topology from listener connection termination Tlp1 to listener connection termination T4, and/or indicates that the StreamMode of T4 is sendOnly. Thus, talker access termination T4 loses the right to speak and is degraded to listener access termination T4, and the talker terminal becomes listener terminal 4. The MGW returns a MOV.reply (Move Reply) message to the MSC Server. At this point, the bearer model is as shown in Figure 23.

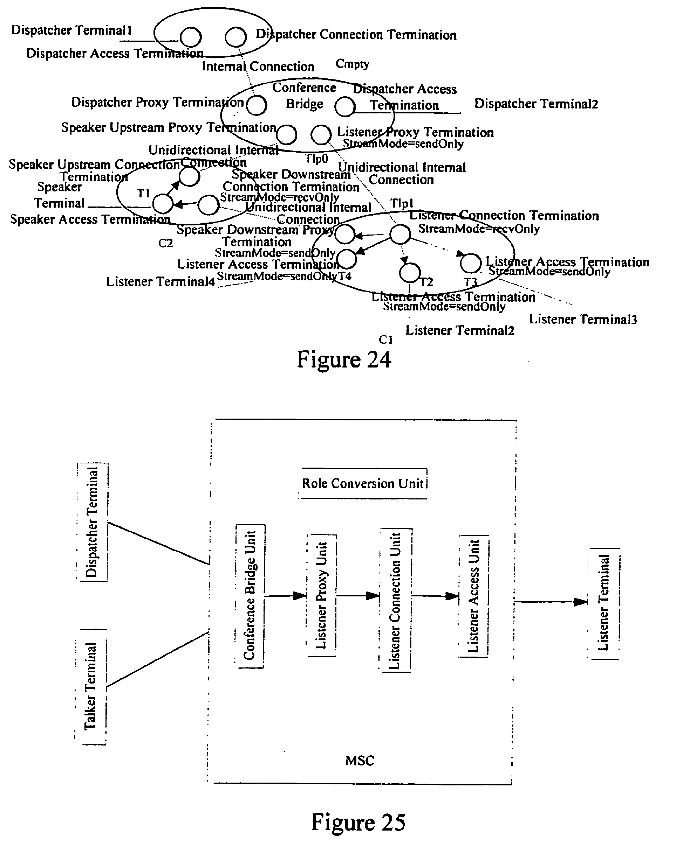

Step 2203-2204: The MSC server sends a MOVrequest message to the MGW for requesting to move listener access termination T1 from listener context C1 to talker context C2, and indicates the unidirectional topology from termination T1 to the talker upstream connection termination and the unidirectional topology relation from the talker downstream connection termination to termination T1. Thus, listener accessing termination T1 obtains the right to speak and is upgraded to talker access termination T1, and listener terminal 1 becomes the talker terminal. The MGW returns a MOV.reply (Move Reply) message to the MSC Server. At this point, the bearer model is as shown in Figure 24.

As shown in Figure 25, the present invention further discloses a system for trunking communication, which includes:
a talker terminal, adapted to send a voice to a talker proxy termination of a conference bridge context;
a dispatcher terminal, adapted to send a voice to a dispatcher proxy termination or a dispatcher access termination of the conference bridge context;
a conference bridge unit, adapted to send the talker voice to a listener proxy termination;
a listener proxy unit, adapted to send the voice from the conference bridge to a listener connection termination;
a listener connection unit, adapted to send the voice from the listener proxy termination to a listener access termination;
a listener access unit, adapted to send the voice from the connection termination to a listener terminal; and
a listener terminal, adapted to receive the voice from the listener access unit.

The system further includes a role conversion unit for converting the roles between the listener and the talker. Specifically, the role conversion unit includes:
a mobile talker access termination unit, adapted to move the talker access termination from the talker context to the listener context and set a unidirectional topology relation from the listener connection termination to the talker access termination; and
a mobile listener access termination unit, for adapted to move the listener access termination from the listener context to the talker context, set a unidirectional topology relation from the listener access termination to the talker upstream connection termination, and set a unidirectional topology relation from the talker downstream connection termination to the listener access termination.

In the method for implementing a trunking communication and the trunking communication according to the present invention, the dispatcher may not be configured.

According to the present invention, in H.248 standard, the trunking service may be implemented without extending any new package. By employing a listener proxy in the conference bridge context, the number of terminations in the conference bridge context may be reduced greatly and the number of conference audio mixing resources used in the trunking service may be reduced greatly.

## Claims

1. A method for implementing a trunking communication service when a caller initiates a trunking call, **characterized by** comprising:
establishing, by a Media Gateway, MGW, a caller bearer and a conference bridge context, and connecting a caller terminal to the conference bridge context via the caller bearer;
establishing, by the MGW, a listener proxy termination in the conference bridge context, wherein the listener proxy termination is adapted to send a voice of the caller to listener terminals; and
establishing, by the MGW, listener bearers and connecting listener terminals to the listener proxy termination in the conference bridge context via the listener bearers;
wherein the trunking communication service comprises Voice broadcast service, VBS, or Voice Group Call Service, VGCS.

2. The method according to claim 1, wherein, when the caller comprises a talker, the establishing the caller bearer comprises:
establishing a talker access termination and a talker context comprising the talker access termination, and connecting the talker access termination with a talker terminal;
establishing a talker proxy termination and the conference bridge context comprising the talker proxy termination; and
establishing a talker connection termination in the talker context, connecting the talker proxy termination in the conference bridge context with the talker connection termination in the talker context, and connecting the talker connection termination in the talker context with the talker access termination.

3. The method according to claim 1, wherein, when the caller comprises a talker, the establishing the caller bearer comprises:
establishing a talker access termination and the conference bridge context comprising the talker access termination, and connecting the talker access termination with a talker terminal.

4. The method according to claim 1, wherein, when the caller comprises a talker, the establishing the caller bearer comprises:
establishing a talker access termination and a talker context comprising the talker access termination, and connecting the talker access termination with a talker terminal;
establishing the conference bridge context, and establishing a talker upstream proxy termination and a talker downstream proxy termination in the conference bridge context; and
establishing a talker upstream connection termination and a talker downstream connection termination in the talker context, connecting the talker upstream proxy termination in the conference bridge context with the talker upstream connection termination in the talker context, connecting the talker downstream proxy termination of the conference bridge context with the talker downstream connection termination in the talker context, and connecting the talker access termination with the talker upstream connection termination and the talker downstream connection termination in the talker context respectively.

5. The method according to claim 2, wherein, during the process for establishing the talker proxy termination in the conference bridge context, an addition request comprises a mode parameter whose value is the talker; and the method further comprising:
employing, by the MGW, different audio mixing policies for the talker and a dispatcher according to the mode parameter.

6. The method according to claim 1, wherein, when the caller comprises a dispatcher, the establishing the caller bearer comprises:
establishing a dispatcher access termination and a dispatcher context comprising the dispatcher access termination, and connecting the dispatcher access termination with a dispatcher terminal;
establishing a dispatcher proxy termination and the conference bridge context comprising the dispatcher proxy termination; and
establishing a dispatcher connection termination in the dispatcher context, connecting the dispatcher proxy termination in the conference bridge context with the dispatcher connection termination in the dispatcher context, and connecting the dispatcher access termination in the dispatcher context with the dispatcher connection termination; or
establishing a dispatcher access termination and the conference bridge context comprising the dispatcher access termination, and connecting the dispatcher access termination with a dispatcher terminal.

7. The method according to any one of claims 1 to 6, wherein establishing a listener bearer comprises:
establishing a listener access termination and a listener context comprising the listener access termination, and connecting the listener access termination with a listener terminal; and
establishing a listener connection termination in the listener context, connecting the listener proxy termination in the conference bridge context with the listener connection termination in the listener context, and connecting the listener connection termination in the listener context with the listener access termination.

8. The method according to claim 7, wherein, during establishing a plurality of the listener bearers, only one listener context is established, and all listener access terminations established during establishing the plurality of the listener bearers are comprised in the listener context; or, during establishing the listener bearer, when a listener access termination is established, a listener context comprising the listener access termination is established.

9. The method according to claim 4, wherein the talker downstream proxy termination receives a media stream directly from a listener connection termination.

10. The method according to claim 1, wherein the listener proxy termination is adapted to send a voice of the caller to the listener terminals comprises:
putting, by a Mobile switching center server, MSC server or the MGW, the listener terminals of the same trunking into a multicast group, wherein the listener proxy termination is adapted to send the voice of the caller to the multicast group.

11. The method according to claim 1, wherein the listener proxy termination is adapted to send a voice of the caller to the listener terminals comprises:
the listener proxy termination is adapted to send a mixed audio stream to a channel sharing a sound source, while each listener waits on the channel sharing the sound source to listen to the voice.

12. A system for implementing a trunking communication service, **characterized by** comprising:
a caller terminal, adapted to initiate a trunking call;
a listener proxy establishment unit, adapted to establish a listener proxy termination in a conference bridge context used to send a voice of a caller to listener terminals; and
a listener bearer establishment unit, adapted to establish listener bearers and connect the listener terminals to the listener proxy termination in the conference bridge context via the listener bearers;
wherein the trunking communication service comprises Voice broadcast service, VBS, or Voice Group Call Service, VGCS.

13. The system according to claim 12, wherein the caller terminal comprises a talker terminal and a dispatcher terminal.

## Patentansprüche

1. Verfahren zum Implementieren eines Bündelungs-Kommunikationsdienstes, das, wenn ein Anrufer einen Bündelungs-Anruf einleitet, **dadurch gekennzeichnet ist, dass** es Folgendes umfasst:
Herstellen eines Anrufer-Trägers und eines Konferenzbrücken-Kontexts durch ein Media Gateway, MGW, und Verbinden eines Anrufer-Endgeräts mit dem Konferenzbrücken-Kontext über den Anrufer-Träger;
Herstellen eines Zuhörer-Proxy-Anschlusses in dem Konferenzbrücken-Kontext durch das MGW, wobei der Zuhörer-Proxy-Anschluss dafür ausgelegt ist, eine Sprache des Anrufers zu Zuhörer-Endgeräten zu senden; und
Herstellen von Zuhörer-Trägern durch das MGW und Verbinden von Zuhörer-Endgeräten mit dem Zuhörer-Proxy-Anschluss in dem Konferenzbrücken-Kontext über die Zuhörer-Träger;
wobei der Bündelungs-Kommunikationsdienst Voice Broadcast Service, VBS, oder Voice Group Call Service, VGCS, umfasst.

2. Verfahren nach Anspruch 1, wobei, wenn der Anrufer einen Sprecher umfasst, das Herstellen des Anrufer-Trägers Folgendes umfasst:
Herstellen eines Sprecher-Zugangsanschlusses und eines Sprecher-Kontexts, der den Sprecher-Zugangsanschluss umfasst, und Verbinden des Sprecher-Zugangsanschlusses mit einem Sprecher-Endgerät;
Herstellen eines Sprecher-Proxy-Anschlusses und des Konferenzbrücken-Kontexts, der den Sprecher-Proxy-Anschluss umfasst; und
Herstellen eines Sprecher-Verbindungsanschlusses in dem Sprecher-Kontext, Verbinden des Sprecher-Proxy-Anschlusses in dem Konferenzbrücken-Kontext mit dem Sprecher-Verbindungsanschluss in dem Sprecher-Kontext und Verbinden des Sprecher-Verbindungsanschlusses in dem Sprecher-Kontext mit dem Sprecher-Zugangsanschluss.

3. Verfahren nach Anspruch 1, wobei, wenn der Anrufer einen Sprecher umfasst, das Herstellen des Anrufer-Trägers Folgendes umfasst:
Herstellen eines Sprecher-Zugangsanschlusses und des Konferenzbrücken-Kontexts, der den Sprecher-Zugangsanschluss umfasst, und Verbinden des Sprecher-Zugangsanschlusses mit einem Sprecher-Endgerät.

4. Verfahren nach Anspruch 1, wobei, wenn der Anrufer einen Sprecher umfasst, das Herstellen des Anrufer-Trägers Folgendes umfasst:
Herstellen eines Sprecher-Zugangsanschlusses und eines Sprecher-Kontexts, der den Sprecher-Zugangsanschluss umfasst, und Verbinden des Sprecher-Zugangsanschlusses mit einem Sprecher-Endgerät;
Herstellen des Konferenzbrücken-Kontexts und Herstellen eines Sprecher-Upstream-Proxy-Anschlusses und eines Sprecher-Downstream-Proxy-Anschlusses in dem Konferenzbrücken-Kontext; und
Herstellen eines Sprecher-Upstream-Verbindungsanschlusses und eines Sprecher-Downstream-Verbindungsanschlusses in dem Sprecher-Kontext, Verbinden des Sprecher-Upstream-Proxy-Anschlusses in dem Konferenzbrücken-Kontext mit dem Sprecher-Upstream-Verbindungsanschluss in dem Sprecher-Kontext, Verbinden des Sprecher-Downstream-Proxy-Anschlusses des Konferenzbrücken-Kontexts mit dem Sprecher-Downstream-Verbindungsanschluss in dem Sprecher-Kontext und Verbinden des Sprecher-Zugangsanschlusses mit dem Sprecher-Upstream-Verbindungsanschluss bzw. dem Sprecher-Downstream-Verbindungsanschluss in dem Sprecher-Kontext.

5. Verfahren nach Anspruch 2, wobei während des Prozesses zum Herstellen des Sprecher-Proxy-Anschlusses in dem Konferenzbrücken-Kontext eine Zusatzanforderung einen Modusparameter umfasst, dessen Wert der Sprecher ist; und das Verfahren ferner Folgendes umfasst:
Verwenden von verschiedenen Audiomischrichtlinien für den Sprecher und einen Dispatcher durch das MGW gemäß dem Modusparameter.

6. Verfahren nach Anspruch 1, wobei, wenn der Anrufer einen Dispatcher umfasst, das Herstellen des Anrufer-Trägers Folgendes umfasst:
Herstellen eines Dispatcher-Zugangsanschlusses und eines Dispatcher-Kontexts, der den Dispatcher-Zugangsanschluss umfasst, und Verbinden des Dispatcher-Zugangsanschlusses mit einem Dispatcher-Endgerät;
Herstellen eines Dispatcher-Proxy-Anschlusses und des Konferenzbrücken-Kontexts, der den Dispatcher-Proxy-Anschluss umfasst; und
Herstellen eines Dispatcher-Verbindungsanschlusses in dem Dispatcher-Kontext, Verbinden des Dispatcher-Proxy-Anschlusses in dem Konferenzbrücken-Kontext mit dem Dispatcher-Verbindungsanschluss in dem Dispatcher-Kontext und Verbinden des Dispatcher-Zugangsanschlusses in dem Dispatcher-Kontext mit dem Dispatcher-Verbindungsanschluss; oder
Herstellen eines Dispatcher-Zugangsanschlusses und des Konferenzbrücken-Kontexts, der den Dispatcher-Zugangsanschluss umfasst, und Verbinden des Dispatcher-Zugangsanschlusses mit einem Dispatcher-Endgerät.

7. Verfahren nach einem der Ansprüche 1 bis 6, wobei das Herstellen eines Zuhörer-Trägers Folgendes umfasst:
Herstellen eines Zuhörer-Zugangsanschlusses und eines Zuhörer-Kontexts, der den Zuhörer-Zugangsanschluss umfasst, und Verbinden des Zuhörer-Zugangsanschlusses mit einem Zuhörer-Endgerät; und
Herstellen eines Zuhörer-Verbindungsanschlusses in dem Zuhörer-Kontext, Verbinden des Zuhörer-Proxy-Anschlusses in dem Konferenzbrücken-Kontext mit dem Zuhörer-Verbindungsanschluss in dem Zuhörer-Kontext und Verbinden des Zuhörer-Verbindungsanschlusses in dem Zuhörer-Kontext mit dem Zuhörer-Zugangsanschluss.

8. Verfahren nach Anspruch 7, wobei während des Herstellens mehrerer der Zuhörer-Träger nur ein Zuhörer-Kontext hergestellt wird und alle Zuhörer-Zugangsanschlüsse, die während des Herstellens mehrerer der Zuhörer-Träger hergestellt werden, in dem Zuhörer-Kontext bestehen; oder während des Herstellens des Zuhörer-Trägers, wenn ein Zuhörer-Zugangsanschluss hergestellt wird, ein Zuhörer-Kontext, der den Zuhörer-Zugangsanschluss umfasst, hergestellt wird.

9. Verfahren nach Anspruch 4, wobei der Sprecher-Downstream-Proxy-Anschluss einen Medienstrom direkt von einem Zuhörer-Verbindungsanschluss empfängt.

10. Verfahren nach Anspruch 1, wobei "der Zuhörer-Proxy-Anschluss ist dafür ausgelegt, eine Sprache des Anrufers zu den Zuhörer-Endgeräten zu senden" Folgendes umfasst:
ein Mobilvermittlungsstellenserver bzw. MSC-Server oder das MGW legt die Zuhörer-Endgeräte derselben Bündelung in eine Multicast-Gruppe, wobei der Zuhörer-Proxy-Anschluss dafür ausgelegt ist, die Sprache des Anrufers zu der Multicast-Gruppe zu senden.

11. Verfahren nach Anspruch 1, wobei "der Zuhörer-Proxy-Anschluss ist dafür ausgelegt, eine Sprache des Anrufers zu den Zuhörer-Endgeräten zu senden" Folgendes umfasst:
der Zuhörer-Proxy-Anschluss ist dafür ausgelegt, einen gemischten Audiostrom zu einem Kanal zu senden, der eine Schallquelle teilt, während jeder Zuhörer auf dem Kanal, der die Schallquelle teilt, wartet, um die Sprache anzuhören.

12. System zum Implementieren eines Bündelungs-Kommunikationsdienstes, **dadurch gekennzeichnet, dass** es Folgendes umfasst:
ein Anrufer-Endgerät, das dafür ausgelegt ist, einen Bündelungs-Anruf einzuleiten;
eine Zuhörer-Proxy-Herstellungseinheit, die dafür ausgelegt ist, einen Zuhörer-Proxy-Anschluss in einem Konferenzbrücken-Kontext herzustellen, der verwendet wird, um eine Sprache eines Anrufers zu Zuhörer-Endgeräten zu senden; und
eine Zuhörer-Träger-Herstellungseinheit, die dafür ausgelegt ist, Zuhörer-Träger herzustellen und die Zuhörer-Endgeräte über die Zuhörer-Träger mit dem Zuhörer-Proxy-Anschluss in dem Konferenzbrücken-Kontext zu verbinden;
wobei der Bündelungs-Kommunikationsdienst Voice Broadcast Service, VBS, oder Voice Group Call Service, VGCS, umfasst.

13. System nach Anspruch 12, wobei das Anrufer-Endgerät ein Sprecher-Endgerät und ein Dispatcher-Endgerät umfasst.

## Revendications

1. Procédé de mise en oeuvre d'un service de communication de groupe, quand un appelant lance un appel de groupe, **caractérisé en ce qu'**il comprend :
l'établissement, par une Passerelle Multimédia, MGW, d'un support d'appelant et d'un contexte de pont de conférence, et la connexion d'un terminal d'appelant au contexte de pont de conférence par l'intermédiaire du support d'appelant ;
l'établissement, par la MGW, d'une terminaison de mandataire d'auditeur dans le contexte de pont de conférence, la terminaison de mandataire d'auditeur étant adaptée pour envoyer une voix de l'appelant à des terminaux d'auditeurs ; et
l'établissement, par la MGW, de supports d'auditeurs et la connexion de terminaux d'auditeurs à la terminaison de mandataire d'auditeur dans le contexte de pont de conférence par l'intermédiaire des supports d'auditeurs ;
dans lequel le service de communication de groupe comprend un service de diffusion Vocal, VBS, ou un Service d'Appel de Groupe Vocal, VGCS.

2. Procédé selon la revendication 1, dans lequel, quand l'appelant comprend un locuteur, l'établissement du support d'appelant comprend :
l'établissement d'une terminaison d'accès de locuteur et d'un contexte de locuteur comprenant la terminaison d'accès de locuteur, et la connexion de la terminaison d'accès de locuteur à un terminal de locuteur ;
l'établissement d'une terminaison de mandataire de locuteur et du contexte de pont de conférence comprenant la terminaison de mandataire de locuteur ; et
l'établissement d'une terminaison de connexion de locuteur dans le contexte de locuteur, la connexion de la terminaison de mandataire de locuteur dans le contexte de pont de conférence à la terminaison de connexion de locuteur dans le contexte de locuteur, et la connexion de la terminaison de connexion de locuteur dans le contexte de locuteur à la terminaison d'accès de locuteur.

3. Procédé selon la revendication 1, dans lequel, quand l'appelant comprend un locuteur, l'établissement du support d'appelant comprend :
l'établissement d'une terminaison d'accès de locuteur et du contexte de pont de conférence comprenant la terminaison d'accès de locuteur, et la connexion de la terminaison d'accès de locuteur à un terminal locuteur.

4. Procédé selon la revendication 1, dans lequel, quand l'appelant comprend un locuteur, l'établissement du support d'appelant comprend :
l'établissement d'une terminaison d'accès de locuteur et d'un contexte de locuteur comprenant la terminaison d'accès de locuteur, et la connexion de la terminaison d'accès de locuteur à un terminal locuteur ;
l'établissement du contexte de pont de conférence, et l'établissement d'une terminaison mandataire amont de locuteur et d'une terminaison mandataire aval de locuteur dans le contexte de pont de conférence ; et
l'établissement d'une terminaison de connexion amont de locuteur et d'une terminaison de connexion aval de locuteur dans le contexte de locuteur, la connexion de la terminaison de connexion amont de locuteur dans le contexte de pont de conférence à la terminaison de connexion amont de locuteur dans le contexte de locuteur, la connexion de la terminaison de connexion aval de locuteur du contexte de pont de conférence à la terminaison de connexion aval de locuteur dans le contexte de locuteur, et la connexion de la terminaison d'accès de locuteur à la terminaison de connexion amont de locuteur et la terminaison de connexion aval de locuteur dans le contexte de locuteur respectivement.

5. Procédé selon la revendication 2, dans lequel durant le processus d'établissement de la terminaison de la terminaison mandataire de locuteur dans le contexte de pont de conférence, une requête d'ajout comprend un paramètre de mode dont la valeur est le locuteur, et le procédé comprenant en outre :
l'emploi, par la MGW, de différentes stratégies de mixage audio du locuteur et d'un répartiteur en fonction du paramètre de mode.

6. Procédé selon la revendication 1, dans lequel, quand l'appelant comprend un répartiteur, l'établissement du support d'appelant comprend :
l'établissement d'une terminaison d'accès de répartiteur et d'un contexte de répartiteur comprenant la terminaison d'accès de répartiteur, et la connexion de la terminaison d'accès de répartiteur à un terminal de répartiteur ;
l'établissement d'une terminaison mandataire de répartiteur et du contexte de pont de conférence comprenant la terminaison mandataire de répartiteur; et
l'établissement d'une terminaison de connexion de répartiteur dans le contexte de répartiteur, la connexion de la terminaison de mandataire de répartiteur dans le contexte de pont de conférence à la terminaison de connexion de répartiteur, et la connexion de la terminaison d'accès de répartiteur dans le contexte de répartiteur à la terminaison de connexion de répartiteur ; ou
l'établissement d'une terminaison d'accès de répartiteur et du contexte de pont de conférence comprenant la terminaison d'accès de répartiteur, et la connexion de la terminaison d'accès de répartiteur à un terminal de répartiteur.

7. Procédé selon l'une quelconque des revendications 1 à 6, dans lequel l'établissement d'un support d'auditeur comprend :
l'établissement d'une terminaison d'accès d'auditeur et d'un contexte d'auditeur comprenant la terminaison d'accès d'auditeur, et la connexion de la terminaison d'accès d'auditeur à un terminal d'auditeur ; et
l'établissement d'une terminaison de connexion d'auditeur dans le contexte d'auditeur,
la connexion de la terminaison de mandataire d'auditeur dans le contexte de pont de conférence avec la terminaison de connexion d'auditeur dans le contexte d'auditeur, et la connexion de la terminaison de connexion d'auditeur dans le contexte d'auditeur à la terminaison d'accès d'auditeur.

8. Procédé selon la revendication 7, dans lequel, durant l'établissement d'une pluralité des supports d'auditeur, un seul contexte d'auditeur est établi, et toutes les terminaisons d'accès d'auditeur établies durant l'établissement de la pluralité de supports d'auditeur sont comprises dans le contexte d'auditeur ; ou, durant l'établissement du support d'auditeur, quand une terminaison d'accès d'auditeur est établie, un contexte d'auditeur comprenant la terminaison d'accès d'auditeur est établi.

9. Procédé selon la revendication 4, dans lequel la terminaison de mandataire aval de locuteur reçoit un flux de données multimédia depuis une terminaison de connexion d'auditeur.

10. Procédé selon la revendication 1, dans lequel l'adaptation de la terminaison de mandataire d'auditeur pour envoyer une voix de l'appelant aux terminaux d'auditeurs comprend :
la mise dans un groupe de multidiffusion, par un serveur du centre de commutation de services mobiles, serveur MSC, ou la MGW, des terminaux d'auditeurs appartenant au même groupe, la terminaison de mandataire d'auditeur étant adaptée pour envoyer la voix de l'appelant au groupe de multidiffusion.

11. Procédé selon la revendication 1, dans lequel l'adaptation de la terminaison de mandataire d'auditeur pour envoyer une voix de l'appelant aux terminaux d'auditeurs comprend :
l'adaptation de la terminaison de mandataire d'auditeur pour envoyer un train audio mixte à un canal partageant une source de son, chaque auditeur attendant sur le canal partageant la source de son pour écouter la voix.

12. Système de mise en oeuvre d'un service de communication de groupe, **caractérisé en ce qu'**il comprend :
un terminal appelant, adapté pour lancer un appel de groupe ;
une unité d'établissement de mandataire d'auditeur, adaptée pour établir une terminaison de mandataire d'auditeur dans un contexte de pont de conférence utilisé pour envoyer la voix d'un appelant à des terminaux d'auditeurs ; et
une unité d'établissement de supports d'auditeurs, adaptée pour établir des supports d'auditeurs et connecter les terminaux d'auditeurs à la terminaison de mandataire d'auditeur dans le contexte de pont de conférence par l'intermédiaire des supports d'auditeurs ;
dans lequel le service de communication de groupe comprend un service de diffusion Vocal, VBS, ou un Service d'Appel de Groupe Vocal, VGCS.

13. Système selon la revendication 12, dans lequel le terminal d'appelant comprend un terminal de locuteur et un terminal de répartiteur.
